(19) Europäisches Patentamt
European Patent Office
Office européen des brevets

(11) **EP 3 278 090 B1**

(12) **FASCICULE DE BREVET EUROPEEN**

(45) Date de publication et mention
de la délivrance du brevet:
**06.12.2023 Bulletin 2023/49**

(21) Numéro de dépôt: **16712343.9**

(22) Date de dépôt: **30.03.2016**

(51) Classification Internationale des Brevets (IPC):
**G01N 22/00** *(2006.01)*

(52) Classification Coopérative des Brevets (CPC):
**G01N 22/00**

(86) Numéro de dépôt international:
**PCT/EP2016/056938**

(87) Numéro de publication internationale:
**WO 2016/156412 (06.10.2016 Gazette 2016/40)**

(54) **DISPOSITIF PRESENTANT UN FAIBLE COEFFICIENT DE REFLEXION EN ENTREE POUR EXPOSER AU MOINS UN OBJET À UN CHAMP ELECTROMAGNETIQUE**

VORRICHTUNG MIT EINEM NIEDRIGEN EINGANGSREFLEXIONSKOEFFIZIENTEN ZUM BEAUFSCHLAGEN MINDESTENS EINES OBJEKTS MIT EINEM ELEKTROMAGNETISCHEN FELD

DEVICE WITH A LOW REFLECTION COEFFICIENT AT INPUT FOR EXPOSING AT LEAST ONE OBJECT TO AN ELECTROMAGNETIC FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2015 FR 1552670**

(43) Date de publication de la demande:
**07.02.2018 Bulletin 2018/06**

(73) Titulaire: **Commissariat à l'Énergie Atomique et aux Énergies Alternatives**
**75015 Paris (FR)**

(72) Inventeurs:
• **CHRETIENNOT, Thomas**
  **52000 Chaumont (FR)**
• **VEZINET, René**
  **46500 Bio (FR)**
• **CATRAIN, Alexandre**
  **46300 Le Vigan (FR)**

(74) Mandataire: **Brevalex**
**Tour Trinity**
**1 B Place de la Défense**
**92400 Courbevoie (FR)**

(56) Documents cités:
**US-A- 3 501 692      US-A- 4 259 561**
**US-A1- 2002 156 588    US-A1- 2004 155 726**

• **L L Chen ET AL: "Planar-circuit Methods" In: "Microwave Electronics: Measurement and Materials Characterization", 28 janvier 2005 (2005-01-28), John Wiley & Sons, Ltd, XP055254800, pages 288-322, DOI: 10.1002/0470020466.ch7, abrégé page 290, colonne de gauche, alinéa 3 - page 292, colonne de droite, alinéa 1 figures 7.4-7.7**
• **GORRITI A G ET AL: "A New Tool for Accurate S-Parameters Measurements and Permittivity Reconstruction", IEEE TRANSACTIONS ON GEOSCIENCE AND REMOTE SENSING, IEEE SERVICE CENTER, PISCATAWAY, NJ, US, vol. 43, no. 8, 1 août 2005 (2005-08-01), pages 1727-1735, XP011136770, ISSN: 0196-2892, DOI: 10.1109/TGRS.2005.851163**

## Description

## DOMAINE TECHNIQUE

La présente invention concerne l'étude de l'effet d'un champ électromagnétique des domaines radio et hyperfréquence sur des objets notamment des objets biologiques ou chimiques à tester. La partie réelle de la permittivité diélectrique relative de tels objets est élevée, supérieure à 20, voire très élevée, souvent supérieure à 50, dans les gammes de fréquences radiofréquence et micro-ondes. Par la suite, cette partie réelle de la permittivité diélectrique relative est appelée permittivité diélectrique relative réelle.

Ces études ont conduit au développement de dispositifs d'exposition de divers objets tels des organismes chimiques ou biologiques de taille et nature variées, allant de la molécule ou de la cellule en solution aqueuse, jusqu'à des organismes plus complets (plantes, tissus, organes particuliers, petits animaux entiers) à un champ électromagnétique.

Ces études peuvent avoir une finalité normative en bioélectromagnétisme portant sur la détermination de seuils de nocivité et d'innocuité des champs électromagnétiques à partir d'ondes continues ou impulsionnelles (téléphonie, transmission, applications électromagnétiques de défense, appareillages électriques, etc...), une finalité médicale (traitement du cancer, stimulation neuronale, seuils d'électroporation réversible/irréversible de certaines cellules, etc....) ou encore une finalité industrielle (décontamination, stérilisation, processus de transformation des aliments, catalyse de réactions chimiques, élimination sélective de certaines bactéries, etc....).

## ÉTAT DE LA TECHNIQUE ANTÉRIEURE

A ce jour, plusieurs techniques existent pour l'exposition d'un objet à un champ électromagnétique.

Les plus courantes utilisent des cellules TEM dans lesquelles l'objet est placé dans une enceinte qui le protège de l'environnement extérieur et est exposé à une onde électromagnétique rasante de type transverse électromagnétique TEM.

Les guides d'ondes rectangulaires et les cellules fil-plaque (wire patch cells ou WPC) sont aussi couramment utilisés.

D'autres techniques ont aussi été développées, de manière moins fréquente, elles utilisent des lignes de transmission de type ruban (strip-line), des lignes bifilaires ou biplaque, des lignes coplanaires, des lignes coaxiales.

Les documents [2] à [4] dont les références sont précisées à la fin de la description présentent une synthèse des dispositifs d'exposition à un champ électromagnétique destinés à des applications bioélectromagnétiques. Le document [12] concerne une structure coaxiale.

Ces guides d'ondes ou ces lignes de transmission doivent être reliés en entrée à une source d'ondes électromagnétiques, l'objet sous test se trouvant sur le chemin de propagation des ondes électromagnétiques. Le dispositif d'exposition à un champ électromagnétique peut être compatible avec une observation simultanée de l'objet par un microscope comme dans le document [11].

On cherche à maîtriser les niveaux de champ électromagnétique et les formes d'onde au niveau de l'objet sous test. Le document [4] et le document [5] dont les références sont précisées à la fin de la description traitent de ce problème. Dans le document de brevet [1] déposé le 28 mai 2014, publiée ultérieurement sous le numéro FR3021743, il a été proposé d'associer l'objet à un élément d'extension afin d'améliorer le facteur de couplage et l'homogénéité du champ dans l'objet.

La qualité d'un dispositif d'exposition à un champ électromagnétique est généralement évaluée en termes de taux de couplage du champ électrique dans l'objet à tester et en termes d'homogénéité du champ électrique et/ou du débit d'absorption spécifique DAS (SAR ou spécifie absorption rate en anglais) à l'intérieur dudit objet.

Or deux paramètres électriques ont aussi leur importance pour qualifier un dispositif d'exposition à un champ électromagnétique, il s'agit du coefficient S11 (coefficient de réflexion à l'entrée lorsque la sortie est adaptée) qui quantifie l'adaptation en entrée du dispositif et du coefficient S21 (coefficient de transmission directe lorsque la sortie est adaptée) qui quantifie les pertes d'insertion. On cherche, pour faciliter les mesures, à concevoir des dispositifs d'exposition à un champ électromagnétique présentant une bonne adaptation, c'est-à-dire possédant un coefficient de réflexion S11 à l'entrée, le plus petit possible, par exemple inférieur à -10 dB et, présentant un minimum de pertes d'insertion, c'est-à-dire possédant un coefficient de transmission directe S21 proche de 0 dB. Par exemple, s'il y a une forte désadaptation en entrée (S11 supérieur à -5 dB), il faudra surévaluer la puissance de l'onde électromagnétique injectée en entrée du dispositif d'exposition par rapport à un dispositif d'exposition bien adapté, de façon à atteindre le niveau de champ électrique souhaité dans l'objet sous test.

On s'aperçoit qu'en plaçant l'objet sous test dans le dispositif d'exposition sans précaution particulière, il est très difficile à la fois d'obtenir un taux de couplage élevé, une bonne adaptation en entrée et des pertes d'insertion faibles.

Pour favoriser le couplage du champ électrique dans l'objet sous test, on met en contact l'objet sous test avec un conducteur électrique creux dans lequel s'établit le champ électrique du dispositif d'exposition à un champ électromagnétique (cas du guide d'onde) ou avec plusieurs conducteurs électriques entre lesquels s'établit le champ électrique (cas des lignes de transmission). Par exemple, si l'objet est positionné à l'intérieur d'un guide d'onde rectangulaire, on s'arrange pour qu'il soit en contact avec les parois du guide d'onde entre lesquelles s'établit le champ électrique.

Le taux de couplage du champ électrique dans l'objet est alors très bon mais l'objet induit une forte désadaptation en entrée et conduit à l'apparition d'une onde réfléchie de forte amplitude. L'amplitude de l'onde effectivement propagée dans l'objet est alors faible voire très faible. Pour assurer, un niveau de champ électrique convenable dans l'objet, on est obligé de surdimensionner la puissance de la source d'ondes électromagnétiques. Ce n'est pas satisfaisant, car, d'une part les sources d'ondes électromagnétiques du marché ont une puissance limitée et d'autre part, ces sources ne fonctionnent pas toutes en présence d'une onde réfléchie de forte amplitude.

Afin de minimiser la désadaptation, une autre approche consiste à réduire le volume de l'objet sous test dans le dispositif d'exposition à un champ électromagnétique. Dans le cas d'une ligne bifilaire, il n'est plus alors en contact avec les deux conducteurs de la ligne bifilaire. Cela permet d'améliorer l'adaptation en entrée, mais cela dégrade de manière drastique le taux de couplage du champ électrique dans l'objet, à cause de la présence d'une couche d'air de très faible permittivité diélectrique relative réelle ($\varepsilon' \approx 1$) entre l'objet de forte permittivité diélectrique relative réelle ($\varepsilon' > 20$) et l'une des parois. Par exemple, si l'épaisseur de cette couche d'air représente seulement 1% de la distance entre les deux conducteurs de la ligne bifilaire entre lesquels s'établit le champ électrique, le taux de couplage du champ électrique dans l'objet peut, selon les dimensions de la ligne bifilaire, chuter dans de grandes proportions, par rapport à la configuration dans laquelle l'objet sous test est en contact avec les deux conducteurs de la ligne bifilaire.

Un compromis entre les deux approches est souvent retenu intentionnellement ou non comme exposé dans les documents [6]-[10]. Ce compromis est souvent imposé par la nature de l'objet sous test, (par exemple des solutions de cellules en suspension, ou en adhérence à la surface d'un récipient), les volumes mis en jeu (solutions de quelques nanolitres à quelques centilitres), les dimensions et la forme des contenants (boîtes de Pétri, microtubes de type Eppendorf (marque déposée par la société éponyme)), ou par le type de dispositif d'exposition à un champ électromagnétique.

Par exemple un échantillon dans une boîte de Pétri placée à plat sur le septum d'une cellule TEM n'aura pas un bon taux de couplage du champ électrique car la boîte est très plate, sa hauteur est très faible par rapport à la distance entre le septum et la masse de la cellule TEM.

Le document US 2004/155726 A1 divulgue une ligne de transmission incluant un diélectrique ayant une constante diélectrique logarithmique alternant entre au moins deux valeurs différentes et le document US3501692 décrit un dispositif d'exposition d'un objet à un champ électromagnétique dans le but de mesurer le taux d'humidité dudit objet.

**EXPOSÉ DE L'INVENTION**

La présente invention a justement comme but de proposer un dispositif d'exposition d'au moins un objet à tester à un champ électromagnétique qui ne présente pas les inconvénients mentionnés ci-dessus.

La présente invention propose un dispositif d'exposition d'au moins un objet à tester à un champ électromagnétique qui permet d'assurer un couplage maximal du champ électrique dans l'objet tout en lui permettant de fonctionner avec de bonnes propriétés électriques, à savoir un coefficient de réflexion à l'entrée le plus petit possible et un coefficient de transmission directe aussi proche que possible de 0 dB.

Un autre but de l'invention est de proposer un dispositif d'exposition d'au moins un objet sous test à un champ électromagnétique, qui permet d'améliorer l'homogénéité du champ électrique dans l'objet.

Pour y parvenir, la présente invention propose un ensemble comprenant au moins un objet à tester, ledit objet à tester possédant une permittivité diélectrique donnée et un dispositif d'exposition à un champ électromagnétique dudit au moins un objet à tester, le dit dispositif étant formé d'un tronçon de dispositif à onde électromagnétique guidée de type guide d'onde ou ligne de transmission dans lequel l'onde électromagnétique va se propager, s'étendant selon un axe longitudinal qui est l'axe de propagation de l'onde électromagnétique, et possédant un conducteur électrique tubulaire creux à l'intérieur duquel s'établit le champ électrique ou plusieurs conducteurs électriques entre lesquels s'établit le champ électrique. Le dispositif d'exposition à un champ électromagnétique est formé, en outre, d'une structure d'adaptation hétérogène en contact mécanique avec le ou les conducteurs électriques. La structure d'adaptation hétérogène comporte au moins un élément d'extension et au moins un logement pour accueillir le ou chaque objet à tester, ce logement étant contenu dans ou juxtaposé à l'élément d'extension, qui est réalisé dans un matériau ayant une permittivité diélectrique relative égale à la permittivité diélectrique relative du ou de chaque objet à tester à plus ou moins 50%. La structure d'adaptation hétérogène possède une dimension, selon l'axe longitudinal, égale à un multiple non nul de demi-longueurs d'onde de l'onde électromagnétique devant se propager dans le dispositif d'exposition au champ électromagnétique.

Il est préférable que le matériau de l'élément d'extension ait une conductivité électrique équivalente aussi proche que possible de celle de l'objet ou de chaque objet à tester.

Dans un mode de réalisation, le dispositif d'exposition à un champ électromagnétique peut être formé d'un tronçon de ligne bifilaire ayant deux conducteurs parallèles, la structure d'adaptation hétérogène s'étendant longitudinalement entre les deux conducteurs et comportant un élément d'extension en matériau diélectrique et un logement juxtaposé à l'élément d'extension.

Dans un autre mode de réalisation, le dispositif d'exposition à un champ électromagnétique peut être formé d'un tronçon de ligne triplaque avec un conducteur central placé entre deux conducteurs en vis-à-vis, un espace étant aménagé entre chacun des conducteurs en vis-à-vis et le conducteur central, la structure d'adaptation hétérogène étant subdivisée en deux demi-structures, chacune des demi-structures étant placée dans un des espaces.

Encore dans un autre mode de réalisation, le dispositif d'exposition à un champ électromagnétique peut être formé d'un tronçon de ligne de transmission comportant un substrat en matériau diélectrique, la structure d'adaptation hétérogène étant logée dans une cavité du substrat ou dans un trou traversant du substrat.

Dans un mode de réalisation additionnel, le dispositif d'exposition à un champ électromagnétique peut être formé d'un tronçon de ligne coaxiale avec un conducteur central et un conducteur externe entourant le conducteur central et du matériau diélectrique entre le conducteur central et le conducteur externe, la structure d'adaptation hétérogène étant à la place d'un tronçon de matériau diélectrique séparant le conducteur central et le conducteur externe de la ligne coaxiale. Le tronçon de ligne de transmission coaxiale peut avoir un conducteur externe tubulaire et un conducteur central scindés en deux segments raccordables.

Dans un autre mode de réalisation additionnel, le dispositif d'exposition à un champ électromagnétique peut être formé d'un tronçon de ligne coplanaire ayant trois conducteurs parallèles, la structure d'adaptation hétérogène étant subdivisée en deux demi-structures d'adaptation hétérogènes s'étendant chacune longitudinalement entre deux conducteurs différents et comportant chacune un élément d'extension en matériau diélectrique et un ou plusieurs logements coopérant avec l'élément d'extension.

Lorsqu'il y a plusieurs logements, ils peuvent être situés le long de la structure d'adaptation hétérogène à des positions multiples de la demi-longueur d'onde de l'onde électromagnétique devant se propager dans le dispositif d'exposition au champ électromagnétique.

Dans un mode de réalisation supplémentaire, la structure d'adaptation hétérogène peut comporter un logement qui est accolé d'un côté à l'élément d'extension et de l'autre est bordé par un élément de bouchage en matériau diélectrique, cet élément de bouchage étant bordé à l'opposé du logement par un matériau diélectrique, cet élément de bouchage étant exclu de la structure d'adaptation hétérogène dans la mesure où il est réalisé dans un matériau ayant une permittivité diélectrique relative aussi proche que possible de celle du matériau diélectrique qui le borde.

Il est envisageable qu'un logement soit placé entre deux segments de l'élément d'extension.

En variante, un logement peut être incorporé dans l'élément d'extension.

Dans un autre mode de réalisation, un logement peut être subdivisé en plusieurs compartiments, chacun devant accueillir un objet.

Dans un autre mode de réalisation supplémentaire, le dispositif d'exposition à un champ électromagnétique peut être formé d'un guide d'onde, la structure d'adaptation hétérogène épousant la forme intérieure du guide d'onde.

Le tronçon de guide d'onde peut être scindé en deux segments raccordables

Dans une variante qui permet d'exposer l'objet au champ électromagnétique et de l'observer simultanément avec un microscope, il est possible que le dispositif d'exposition à un champ électromagnétique comporte une partie amovible comprenant un premier tronçon de ligne de transmission doté de la structure d'adaptation hétérogène et une partie d'accueil, comportant un deuxième et un troisième tronçon de ligne de transmission, destinée à être placée sur la platine du microscope, en position de travail, le premier tronçon de ligne de transmission étant connecté d'un côté au deuxième tronçon de ligne de transmission et de l'autre à l'autre au troisième tronçon de ligne de transmission.

La présente invention concerne également un procédé de test d'au moins un objet à tester présentant une permittivité diélectrique relative défini par la revendication 16. Ce procédé comprend les étapes consistant à :

- fournir un tronçon de dispositif à onde électromagnétique guidée de type guide d'onde ou ligne de transmission dans lequel l'onde électromagnétique va se propager, s'étendant selon un axe longitudinal qui est l'axe de propagation de l'onde électromagnétique, et possédant un conducteur électrique tubulaire creux à l'intérieur duquel s'établit le champ électrique ou plusieurs conducteurs électriques entre lesquels s'établit le champ électrique et d'une structure d'adaptation hétérogène en contact mécanique avec le ou les conducteurs électriques, la structure d'adaptation hétérogène comportant au moins un élément d'extension et au moins un logement contenu dans ou juxtaposé à l'élément d'extension, l'élément d'extension étant réalisé dans un matériau ayant une permittivité diélectrique relative aussi proche que possible de celle du ou de chaque objet et la structure d'adaptation hétérogène possédant une dimension, selon l'axe longitudinal, égale à un multiple non nul de demi-longueurs d'onde de l'onde électromagnétique devant se propager dans le tronçon de dispositif à onde électromagnétique guidée ;
- mettre en place l'objet à tester dans le logement ;
- faire se propager une onde électromagnétique incidente dans le tronçon de dispositif à onde électromagnétique guidée.

**BRÈVE DESCRIPTION DES DESSINS**

La présente invention sera mieux comprise à la lecture de la description d'exemples de réalisation donnés, à titre purement indicatif et nullement limitatif, en faisant référence aux dessins annexés sur lesquels :

- la figure 1 illustre un dispositif d'exposition d'un objet à un champ électromagnétique, conforme à l'invention, et basé sur une ligne de transmission bifilaire;
- les figures 2A, 2B modélisent une ligne de transmission présentant deux ruptures d'impédance, la distance entre les plans A et B étant, à la fréquence nominale de travail, quelconque dans le cas de la figure 2A et égale à la moitié de la longueur d'onde de l'onde se propageant dans la ligne de transmission dans le cas de la figure 2B, cette figure illustrant le principe sur lequel repose la présente invention;
- la figure 3A illustre l'adaptation en entrée et les pertes d'insertion du dispositif d'exposition à un champ électromagnétique de la figure 1, ainsi que l'adaptation en entrée et les pertes d'insertion d'un dispositif d'exposition à un champ électromagnétique dans lequel l'objet, de longueur quelconque, est placé seul dans le dispositif d'exposition ;
- la figure 3B illustre l'amplitude du champ électrique au niveau de la structure d'adaptation hétérogène du dispositif d'exposition à un champ électromagnétique de la figure 1 ;
- les figures 4A à 4C illustrent une vue éclatée, une vue en position de travail et une vue rapprochée sur la structure d'adaptation hétérogène, d'un dispositif d'exposition à un champ électromagnétique selon l'invention, basé sur une ligne de transmission triplaque ;
- la figure 5A illustre l'adaptation en entrée et les pertes d'insertion du dispositif d'exposition à un champ électromagnétique des figures 4A-4C ;
- la figure 5B illustre l'amplitude du champ électrique au niveau de la structure d'adaptation hétérogène vue sur la figure 4C ;
- les figures 6A à 6C illustrent respectivement la partie d'accueil, la partie amovible et les deux parties réunies d'un dispositif d'exposition à un champ électromagnétique selon l'invention autorisant une utilisation sous microscope ;
- la figure 7A illustre l'adaptation en entrée et les pertes d'insertion du dispositif d'exposition à un champ électromagnétique des figures 6A-6C ;
- la figure 7B illustre l'amplitude du champ électrique au niveau de la structure d'adaptation hétérogène vue sur la figure 6B ;
- les figures 8A, 8B1, 8B2, 8C1, 8C2 illustrent respectivement un dispositif d'exposition à un champ électromagnétique basé sur une ligne de transmission micro-ruban, des lignes de transmission coplanaires, une ligne de transmission coaxiale ;
- les figures 8D et 8E illustrent respectivement un dispositif d'exposition à un champ électromagnétique basé sur un guide d'onde rectangulaire, un guide d'onde circulaire.

Les différents modes de réalisations décrits doivent être compris comme n'étant pas exclusifs les uns des autres. Des structures bien connues ne sont pas représentées en détails afin de ne pas alourdir inutilement la présente invention. Des parties identiques, similaires ou équivalentes des différentes figures décrites ci-après portent les mêmes références numériques de façon à faciliter le passage d'une figure à l'autre. Les termes gauche droit haut bas sommet fond et autres sont applicables aux modes de réalisation montrés et décrits en relation avec les figures. Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

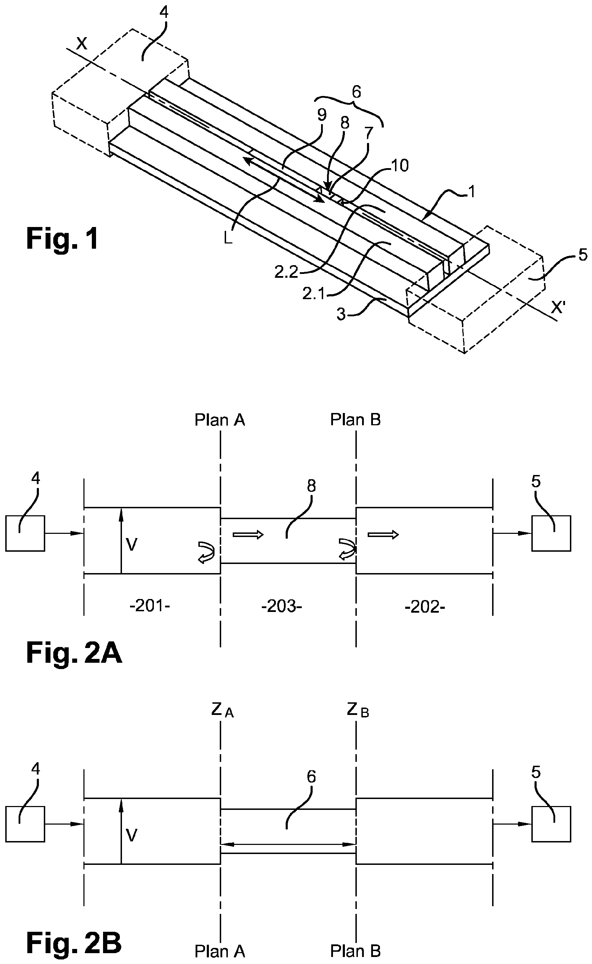

On va maintenant décrire en se référant à la figure 1, un exemple de dispositif d'exposition d'au moins un objet à un champ électromagnétique, objet de la présente invention.

Il est formé d'un tronçon de dispositif à onde électromagnétique guidée 1. Dans cet exemple, il s'agit d'un tronçon de ligne de transmission, plus particulièrement d'un tronçon de ligne de transmission de type bifilaire, formé de deux conducteurs 2.1, 2.2 parallèles s'étendant selon un axe longitudinal XX'. Les deux conducteurs 2.1, 2.2 surmontent une plaque support 3 de matériau diélectrique, en verre par exemple. Dans cet exemple, les conducteurs 2.1, 2.2 ont une section sensiblement carrée, de 3 millimètres de côté, mais d'autres sections sont possibles, par exemple rectangulaires. Les deux conducteurs sont espacées l'un de l'autre, par exemple d'une distance d'un millimètre, et sont donc isolés électriquement l'un de l'autre. L'une des extrémités du tronçon de la ligne de transmission est destinée à être reliée à une source d'onde électromagnétique 4 et l'autre extrémité est destinée à être reliée à une charge 5. La source 4 et la charge 5 ne sont juste qu'esquissées.

La source d'onde électromagnétique 4 peut être une source radiofréquence, une source hyperfréquence ou une source impulsionnelle. La charge 5 présente une impédance égale à l'impédance caractéristique du dispositif d'exposition à un champ électromagnétique. Il peut s'agir de l'impédance d'entrée d'un appareil de mesure comme un oscilloscope.

Le tronçon 1 de dispositif à onde guidée est destiné à véhiculer une onde électromagnétique délivrée par la source 4 jusqu'à la charge 5. La propagation s'effectue selon l'axe longitudinal XX'. Lors de cette propagation, les lignes de champ électrique s'étendent entre les deux conducteurs 2.1, 2.2 de la ligne de transmission, sensiblement perpendiculairement à l'axe longitudinal XX' qui est l'axe de propagation des ondes guidées. Selon l'invention, le tronçon 1 de dispositif à onde guidée est équipé d'une structure d'adaptation hétérogène 6, comprenant au moins un logement 7 pour l'objet 8 ou chaque objet et au moins un élément d'extension 9 qui coopère avec le logement 7. La structure d'adaptation hétérogène 6 s'étend longitudinalement entre les deux conducteurs 2.1, 2.2 de la ligne de transmission 1. Selon une caractéristique de l'invention, l'élément d'extension 9 est réalisé dans un matériau ayant une permittivité diélectrique relative ε aussi proche que possible de celle de l'objet 8 ou de chaque objet.

Pour mémoire, la permittivité diélectrique relative ε d'un matériau est une grandeur complexe qui, dans ce contexte, est égale à :

$$\varepsilon = \varepsilon^{'} - j\frac{\sigma_E}{2\pi f.\varepsilon_0}$$

- ε' est la partie réelle de la permittivité diélectrique relative du matériau (elle est aussi appelée permittivité diélectrique réelle du matériau dans ce document),
- $\sigma_E$ est la conductivité électrique équivalente du matériau, elle représente à la fois les phénomènes de conduction électrique et de polarisation diélectrique,
- f est la fréquence de l'onde électromagnétique se propageant dans le matériau,
- $\varepsilon_0$ est la permittivité diélectrique du vide,
- j est le nombre complexe tel que : $j^2=-1$

Les propriétés diélectriques d'un matériau sont définies soit par $\sigma_E$ défini plus haut dans la formule de la permittivité diélectrique relative ε, soit par le doublet ε', tanδ où tanδ est la tangente de l'angle de perte diélectrique. Tanδ tient compte simultanément des pertes par conduction et des pertes dues aux phénomènes de polarisation et de relaxation :

$$\tan\partial = \frac{\sigma_E}{\omega\varepsilon_0\varepsilon^{'}}$$

avec ω= 2πf.

Dans la suite de la description, les deux notations sont employées.

Dans ce contexte, le fait que l'élément d'extension 9 soit réalisé dans un matériau ayant une permittivité diélectrique relative ε aussi proche que possible de celle de l'objet 8 ou de chaque objet, signifie que ce matériau présente une permittivité diélectrique relative égale à la permittivité diélectrique relative de l'objet 8 à plus ou moins 50 % près.

Avantageusement, ce matériau peut présenter une permittivité diélectrique relative égale à la permittivité diélectrique relative de l'objet 8 ou de chaque objet à plus ou moins 40 % près, de préférence à plus ou moins 30 % près, de préférence encore à plus ou moins 25 % près, préférentiellement à plus ou moins 20 % près, et encore plus préférentiellement à plus ou moins 10 % près, voire à 0% près. Cette dernière proposition est idéale.

Selon un mode de réalisation préféré, le matériau de l'élément d'extension 9 a une conductivité électrique équivalente $\sigma_E$ aussi proche que possible de celle de l'objet 8 ou de chaque objet. Cela signifie dans ce contexte, que le matériau de l'élément d'extension 9 a une conductivité électrique équivalente $\sigma_E$ égale à la conductivité électrique équivalente de l'objet 8 à plus ou moins 30 % près, de préférence à plus ou moins 25 % près, de préférence encore à plus ou moins 20 % près, préférentiellement à plus ou moins 10 % près, voire à 0% près.

Il est tout à fait possible que le matériau de l'élément d'extension 9 ait conductivité électrique équivalente $\sigma_E$ nulle ou quasi nulle. En choisissant un matériau pour l'élément d'extension ayant une conductivité électrique équivalente $\sigma_E$ idéalement égale ou proche de la conductivité électrique équivalente de l'objet 8, on améliore l'efficacité du dispositif d'exposition d'au moins un objet à un champ électromagnétique. Si on prévoit plusieurs éléments d'extension, on les réalisera de préférence dans le même matériau de manière à ce qu'ils possèdent la même permittivité diélectrique relative ε et la même conductivité électrique équivalente $\sigma_E$.

La structure d'adaptation hétérogène 6 est en contact mécanique avec chacun des conducteurs 2.1, 2.2 du tronçon 1 de la ligne de transmission.

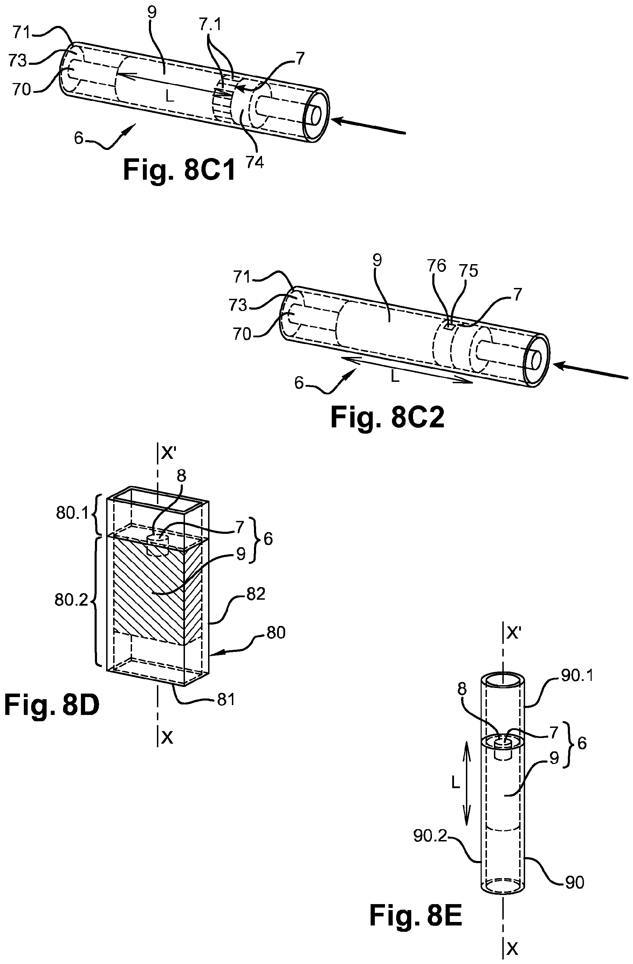

Pour améliorer le couplage électrique entre la structure d'adaptation hétérogène 6 et les conducteurs du tronçon de ligne de transmission du dispositif à onde électromagnétique guidée 1, il est possible de prévoir une métallisation des faces de l'élément d'extension 9 en contact mécanique avec les conducteurs du tronçon de ligne de transmission. On cherche à ce que le contact mécanique soit le plus intime possible et la métallisation permet de réaliser un contact métal sur métal. Si le dispositif d'exposition à un champ électromagnétique est basé sur un guide d'onde, on prévoit la métallisation entre les parois du guide d'onde et la structure d'adaptation hétérogène. On suppose que sur la figure 8D décrite ultérieurement, les faces de l'élément d'extension 9 devant venir en contact avec les parois du tronçon de guide d'onde 80 sont métallisées.

Selon une autre caractéristique de l'invention, la structure d'adaptation hétérogène 6 a une dimension L, le long de l'axe longitudinal XX', égale à un nombre n (entier non nul) de demi-longueurs d'onde $\lambda_g/2$ de l'onde électromagnétique $\lambda_g$ guidée se propageant dans le dispositif d'exposition à un champ électromagnétique. On suppose que dans l'exemple de la figure 1 n=1.

Un logement 7 pour l'objet 8 a été représenté à une extrémité de l'élément d'extension 9. Ce n'est qu'un exemple parmi d'autres car une pluralité de localisations est possible. Dans cet exemple, le logement 7 est juxtaposé à l'élément d'extension 9, du côté de son extrémité aval par rapport au sens de propagation des ondes électromagnétiques (matérialisée par la flèche). Le logement 7 est directement délimité par les deux conducteurs 2.1, 2.2, la plaque de fond 3, d'un côté le bout de l'élément d'extension 9 et de l'autre un élément de bouchage 10 en matériau diélectrique. Cet élément de bouchage 10 prend la forme d'une cloison. Cet élément de bouchage 10 n'appartient pas à la structure d'adaptation hétérogène 6 et sa longueur n'est pas prise en compte dans la longueur L de la structure d'adaptation hétérogène dans la mesure où cet élément de bouchage est réalisé dans un matériau ayant une permittivité diélectrique relative qui est aussi proche que possible de celle du matériau diélectrique séparant les deux conducteurs 2.1, 2.2 du tronçon de ligne de transmission 1. Dans l'exemple décrit, il s'agit d'air. On donne à l'expression « aussi proche que possible » la même signification qu'expliqué plus haut.

Pour tester l'objet 8, il suffit de le placer dans le logement 7 et d'appliquer une onde électromagnétique incidente de manière à ce qu'elle se propage dans le tronçon 1 de dispositif à onde guidée 1. Cette onde électromagnétique est générée par la source 4 et se propage vers la charge 5.

Une ligne de transmission présentant deux ruptures d'impédance peut être modélisée par la mise en cascade de trois quadripôles, chacun correspondant à un segment de ligne. On se réfère à la figure 2A. Les deux quadripôles d'extrémité 201, 202 représentent un segment d'entrée et un segment de sortie du dispositif, ils ont une impédance caractéristique $Z_c$ égale à 50 Ω le plus souvent. Le quadripôle central 203, représente un segment contenant l'objet à exposer aux ondes électromagnétiques, sa longueur est celle de l'objet 8 qui est quelconque. Son impédance caractéristique $Z_{obj}$ est réduite par rapport à l'impédance $Z_c$ des deux autres quadripôles 201, 202 d'un facteur supérieur à 1 et inférieur ou égal à la racine carrée de ε', avec ε' permittivité diélectrique relative réelle de l'objet.

La rupture d'impédance caractéristique provoquée par la présence de l'objet à tester est à l'origine d'apparition de phénomènes de réflexion au niveau des plans A et B frontières entre deux des quadripôles successifs 201-202 ; 202-203. Le plan A est à la frontière entre le segment d'entrée et le segment central, le plan B est à la frontière entre le segment central et le segment de sortie. Le dispositif d'exposition à un champ électromagnétique souffre donc d'une mauvaise adaptation en entrée et de pertes d'insertion significatives. Ce phénomène est d'autant plus intense que l'objet 8 occupe un volume important dans la ligne de transmission.

Comme énoncé plus haut dans le cas d'une ligne de transmission bifilaire, pour obtenir un bon couplage électrique entre l'objet et le champ électrique, il est préférable que l'objet soit en contact mécanique avec les conducteurs 2.1, 2.2 de la ligne de transmission 2 entre lesquels le champ électrique s'établit.

Pour satisfaire au mieux à ces deux contraintes contradictoires, c'est pour cela que la présente invention propose de placer dans la ligne de transmission la structure d'adaptation hétérogène de longueur L égale à $n.\lambda_g/2$ comme illustré sur la figure 2B.

Ainsi, le rapport courant/tension dans le plan A est égal au rapport courant/tension dans le plan B. L'impédance $Z_A$ vue dans le plan A est égale à l'impédance $Z_B$ vue dans le plan B. Si le dispositif d'exposition à un champ électromagnétique est chargé à sa sortie par une impédance égale à son impédance caractéristique $Z_c$ (en général 50 Ω), on a alors l'impédance $Z_A$ égale à l'impédance $Z_c$. Ainsi même en présence d'un objet sous test, le dispositif d'exposition à un champ électromagnétique a une adaptation en entrée bien meilleure que dans l'art antérieur et des pertes d'insertion bien plus faibles que dans l'art antérieur.

Le principe sur lequel repose l'invention reste valable et applicable avec des dispositifs à onde guidée d'impédance caractéristique différente de 50 Ω.

Avec un dispositif d'exposition à un champ électromagnétique de structure comparable à celui illustré à la figure 1, des simulations ont été réalisées, pour une onde électromagnétique de fréquence égale à 1,5 GHz, avec une structure d'adaptation hétérogène ayant une section droite de 1mm × 3mm et une longueur L de 14,6 mm et une seconde structure de mêmes caractéristiques diélectriques mais ayant une section droite de 1mm × 3mm et une longueur L de 4 mm. Le logement pour l'objet est simplement limité d'un côté par l'élément d'extension et de l'autre par une paroi en matériau diélectrique, du polytétrafluoroéthylène.

L'objet sous test est de l'eau distillée dont la permittivité diélectrique relative réelle ε' vaut 78,4 et la conductivité électrique équivalente $\sigma_E$ vaut 5,6 $10^{-6}$ S/m à la fréquence de 1,5 GHz. L'élément d'extension qui est contigu à l'objet sous test est en céramique dite à haute permittivité diélectrique relative réelle, en l'occurrence dans cet exemple, sa permittivité diélectrique relative réelle est égale environ à 83.

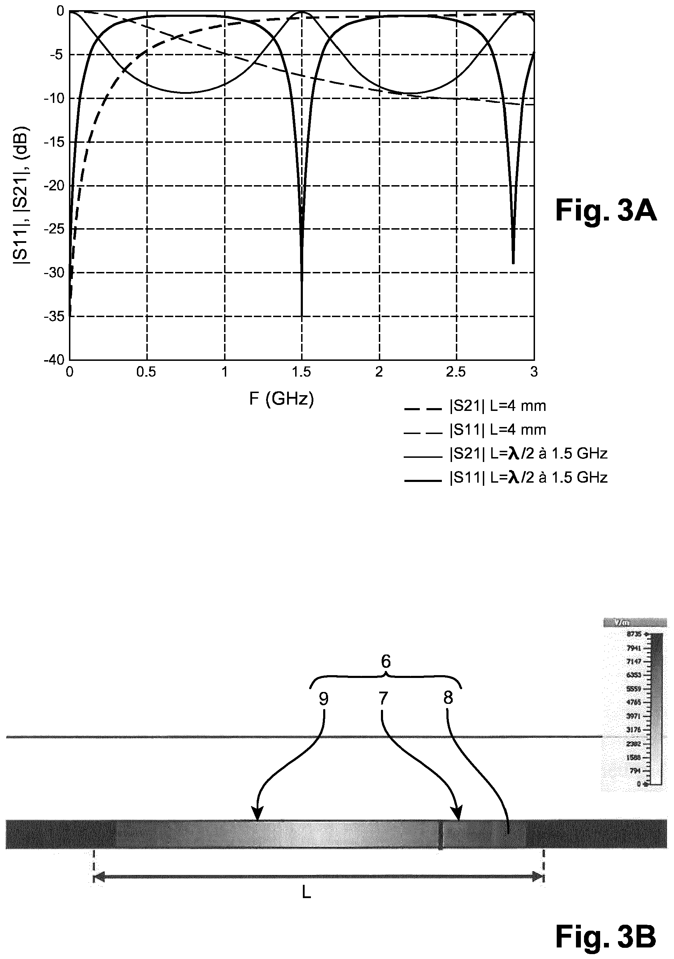

Le graphique de la figure 3A représente les coefficients S11 (coefficient de réflexion à l'entrée lorsque la sortie est adaptée) et S21 (coefficient de transmission directe lorsque la sortie est adaptée) pour la structure d'adaptation hétérogène de longueur 14,6 mm et la seconde structure de longueur 4 mm dans la bande 0-3 GHz. On s'aperçoit que l'adaptation en entrée est bien meilleure et que les pertes d'insertion sont plus faibles avec la structure d'adaptation hétérogène à la fréquence de 1,5 GHz. Dans le dispositif d'exposition à un champ électromagnétique équipé de la seconde structure de longueur 4 mm, l'adaptation en entrée et les pertes d'insertion ne sont pas du tout satisfaisantes aux fréquences les plus hautes et en particulier à 1,5 GHz, fréquence de travail de cet exemple.

On notera que la demi-longueur d'onde d'une onde électromagnétique se propageant dans un milieu de permittivité diélectrique relative réelle d'environ 78,4 à une fréquence de 1,5 GHz est en fait de 11,3 mm. Dans les simulations effectuées avec le dispositif d'exposition à un champ électromagnétique de la figure 1, la longueur L de la structure d'adaptation hétérogène a été ajustée à cause de la nature de la plaque support 3 sous les conducteurs 2.1, 2.2 et de la présence d'air au-dessus des conducteurs. En effet, les lignes de champ électrique, prenant naissance entre les deux conducteurs, se répartissent préférentiellement dans l'objet et dans l'élément d'extension 9 mais également dans la plaque support 3 et dans l'air au-dessus des deux conducteurs. Le dimensionnement de la structure d'adaptation hétérogène doit tenir compte de la permittivité diélectrique relative réelle du matériau d'extension (ici la céramique) ($\varepsilon' \approx 83$), de la plaque support en verre ($\varepsilon' \approx 4$) et de l'air ($\varepsilon' \approx 1$).

En ce qui concerne, les conductivités électriques équivalentes, celles du verre et de l'air sont considérées comme nulles.

On donnerait à la structure d'adaptation hétérogène une longueur L de 11, 3 mm, si la propagation le long des deux conducteurs 2.1, 2.2 était homogène dans un matériau de permittivité diélectrique relative égale à celle de l'élément d'extension 9 et de l'objet 8.

On va maintenant s'intéresser à l'homogénéité du champ électrique dans la structure d'adaptation hétérogène en se référant à la figure 3B. Elle représente l'amplitude du champ électrique dans la structure d'adaptation hétérogène 6 de la figure 1. Cette amplitude varie. Elle est minimale au centre de la structure d'adaptation hétérogène 6 et est maximale à ses extrémités. Dans l'exemple de la figure 1, l'objet 8 est placé à une extrémité de la structure d'adaptation hétérogène 6. Pour assurer une bonne homogénéité du champ électrique, on adapte la dimension de l'objet à tester selon l'axe XX' de propagation des ondes. En ajustant sa dimension, on place l'objet dans une zone où le champ électrique varie peu et de préférence où il est maximal. Dans l'exemple décrit, la dimension de l'échantillon correspond environ à 20% de la longueur L de la structure d'adaptation hétérogène 6 et l'homogénéité du champ électrique est estimée à 15%.

On précise que des céramiques, par exemple à base de baryum, samarium, titane, peuvent posséder une permittivité diélectrique relative réelle $\varepsilon'$ comprise entre environ 70 et 80. Des matériaux, autres que la céramique, pourraient être utilisés pour réaliser l'élément d'extension, on peut penser à un gel comme l'agar agar ou à un matériau composite. Ces matériaux ont des permittivités diélectriques relatives réelles élevées, supérieures par exemple à 70. Ces matériaux conviennent bien sûr, si dans le cadre de l'invention, ils répondent à la condition liant les permittivités diélectriques relatives de l'objet et de l'élément d'extension.

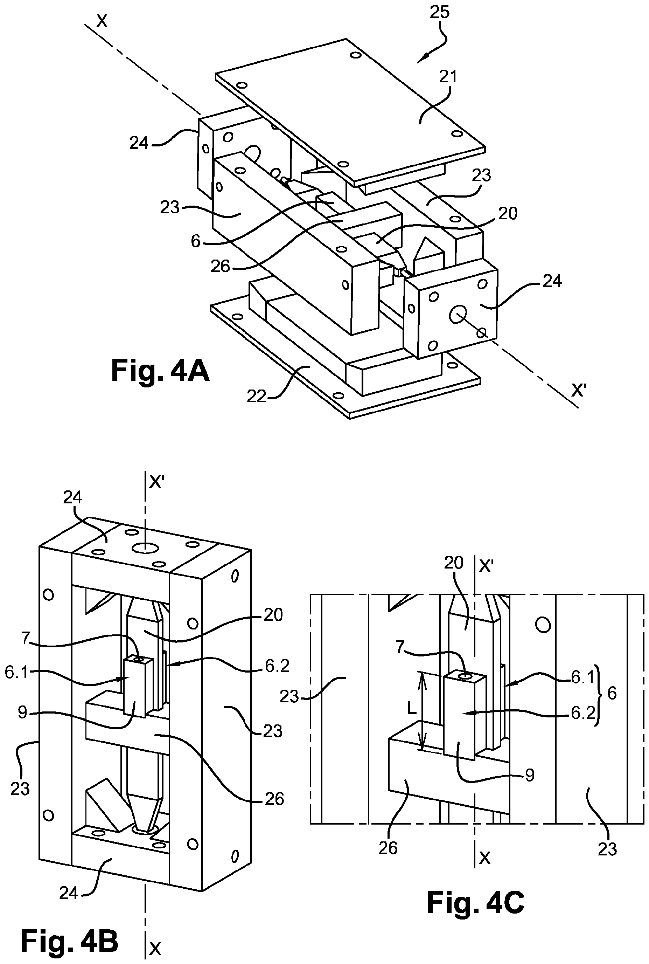

On se réfère aux figures 4A, 4B, 4C qui montrent respectivement une vue éclatée, une vue en position de fonctionnement (conducteurs de masse ôtés) et une vue partielle agrandie d'une autre variante d'un dispositif d'exposition à un champ électromagnétique conforme à l'invention.

Le dispositif d'exposition à un champ électromagnétique est formé d'un tronçon de ligne de transmission de type ligne triplaque. Une ligne de transmission de type triplaque comporte classiquement un conducteur central 20 et deux conducteurs 21, 22 parallèles, placés en vis-à-vis, de part et d'autre du conducteur central 20, à égale distance de ce dernier. Le conducteur central 20 s'étend selon un axe longitudinal XX' qui est aussi l'axe de propagation de l'onde électromagnétique. Il est en forme de ruban plat avec deux faces principales.

Les deux conducteurs 21, 22 parallèles jouent un rôle de masse électrique. Deux flancs 23 électriquement conducteurs placés en vis-à-vis peuvent être prévus. Ils relient chacun électriquement latéralement les deux conducteurs parallèles 21, 22. Ils permettent de forcer les deux conducteurs parallèles 21, 22 au même potentiel électrique, d'obtenir une ligne de transmission fermée et de rigidifier la ligne de transmission. Les deux flancs 23 et les deux conducteurs parallèles 21, 22 forment une enceinte tubulaire 25 contenant le conducteur central 20. Les deux flancs électriquement conducteurs ne sont toutefois pas nécessaires d'un point de vue transmission de l'onde électromagnétique.

Deux embouts transversaux 24 électriquement conducteurs sont prévus aux deux extrémités du conducteur central 20. Ils permettent de relier l'entrée du tronçon de la ligne de transmission à la source d'onde électromagnétique et à la charge. La source d'onde électromagnétique et la charge ne sont pas représentées sur ces figures pour ne pas les surcharger. Au moins une cale 26 en matériau diélectrique, par exemple en polytétrafluoroéthylène, peut être prévue pour maintenir mécaniquement le conducteur central 20 par rapport à l'enceinte tubulaire 25. Dans l'exemple décrit, la cale 26 vient en appui sur les deux flancs 23 et le conducteur central 20 la traverse. D'autres configurations sont possibles, notamment, la cale pourrait être omise.

On suppose, dans l'exemple non limitatif décrit que la longueur hors tout entre les deux embouts transversaux est d'environ 10 cm et que la largeur hors tout entre les deux flancs 23 est d'environ 5 cm.

Dans l'exemple des figures 4, la structure d'adaptation hétérogène 6, est subdivisée en deux demi-structures d'adaptation hétérogènes 6.1 et 6.2, placées chacune entre l'une des faces principales du conducteur central 20 et l'un des conducteurs de masse 21 ou 22 et en contact mécanique avec le conducteur central 20 et le conducteur de masse associé 21 ou 22. La ligne triplaque ainsi équipée des deux demi-structures d'adaptation hétérogènes 6.1, 6.2 est symétrique par rapport au conducteur central 20. Ces deux demi-structures d'adaptation hétérogènes 6.1, 6.2 comprennent chacune un élément d'extension 9 prenant la forme d'un bloc parallélépipédique. Chaque élément d'extension 9 peut avoir une extrémité encastrée dans une des cales 26 ou seulement en contact mécanique. Chaque élément d'extension 9 incorpore un logement 7 pour l'objet. Le logement 7 est un trou borgne s'étendant dans l'élément d'extension 9 sensiblement selon l'axe longitudinal XX'. Sur les figures 4B et 4C, le dispositif d'exposition à un champ électromagnétique a été retourné par rapport à la vue de la figure 4A. Ce trou borgne 7 est destiné à accueillir un objet qui peut être liquide. En fonctionnement, le trou borgne 7 est rempli à ras bord par l'objet et il n'est pas nécessaire de prévoir un bouchon de fermeture pour l'obturer. Le remplissage se fait en ôtant au moins un des conducteurs 21, 22 de masse. Ils ont d'ailleurs été ôtés sur la figure 4B.

Un dispositif d'exposition à un champ électromagnétique tel que celui illustré aux figures 4A à 4C a été simulé à l'aide du logiciel de simulation CST Microwave Studio de la société Computer Simulation Technology AG.

Les différents matériaux du dispositif d'exposition à un champ électromagnétique ont été modélisés de la manière suivante :

Conducteur central, conducteurs de masse, flancs, embouts transversaux : aluminium (modèle électrique CST) :
*Conductivité électrique* $\sigma = 3,56 \times 10^{+7}$ *S/m*
Cale : polytétrafluoroéthylène (modèle électrique CST) :

*Permittivité diélectrique* relative *réelle* $\varepsilon' = 2,1$
*Tangente de l'angle de perte diélectrique* $\tan\delta = 2 \times 10^{-4}$

Elément d'extension : céramique haute permittivité (modèle défini par l'utilisateur) :

*Permittivité diélectrique* relative *réelle* $\varepsilon' = 78$
*Tangente de l'angle de perte diélectrique* $\tan\delta = 5 \times 10^{-4}$

Objet à tester : échantillon biologique en solution (modèle défini par l'utilisateur) :

*Permittivité diélectrique* relative *réelle* $\varepsilon' = 78$
*Conductivité électrique équivalente* $\sigma_E = 1$ *S/m*

Chacune des demi-structures d'adaptation hétérogènes 6.1, 6.2 a une longueur L égale à une demi longueur d'onde (n=1) de l'onde guidée se propageant dans le dispositif d'exposition à un champ électromagnétique, à la fréquence de 1,5 GHz, soit : 15,4 mm. Le dispositif d'exposition à un champ électrique est accordé à la fréquence de 1,5 GHz.

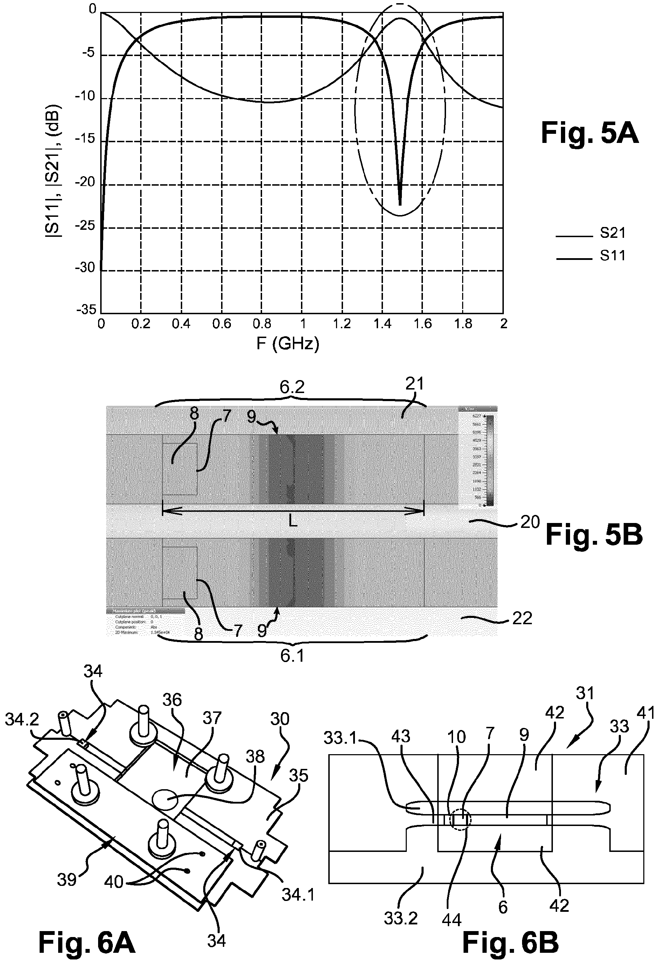

La figure 5A représente la variation des coefficients S11 (coefficient de réflexion à l'entrée lorsque la sortie est adaptée) et S21 (coefficient de transmission directe lorsque la sortie est adaptée) pour le dispositif d'exposition à un champ électromagnétique des figures 4A à 4C dans la bande 0-2GHz. A la fréquence de 1,5 GHz les pertes d'insertion sont inférieures à -1 dB et l'adaptation en entrée est meilleure que - 15 dB.

La figure 5B montre, l'amplitude du champ électrique dans le dispositif d'exposition à un champ électromagnétique des figures 4A à 4C excité par un signal sinusoïdal à une fréquence de 1,5 GHz, vu en vue de dessus. Un objet 8 est placé dans chacun des trous borgnes 7 logés dans les éléments d'extensions 9. Ces trous borgnes 7 sont représentés sur cette figure, à gauche des deux demi-structures d'adaptation hétérogènes 6.1, 6.2. Dans la partie centrale se trouve le conducteur central 20 et de part et d'autre les demi-structures d'adaptation hétérogènes, les deux conducteurs 21, 22 jouant le rôle de masse électrique.

On peut remarquer, comme attendu, que l'homogénéité du champ électrique dans l'objet est bonne, la variation du champ électrique est inférieure à 10%. Cette évaluation est basée sur les simulations précédentes.

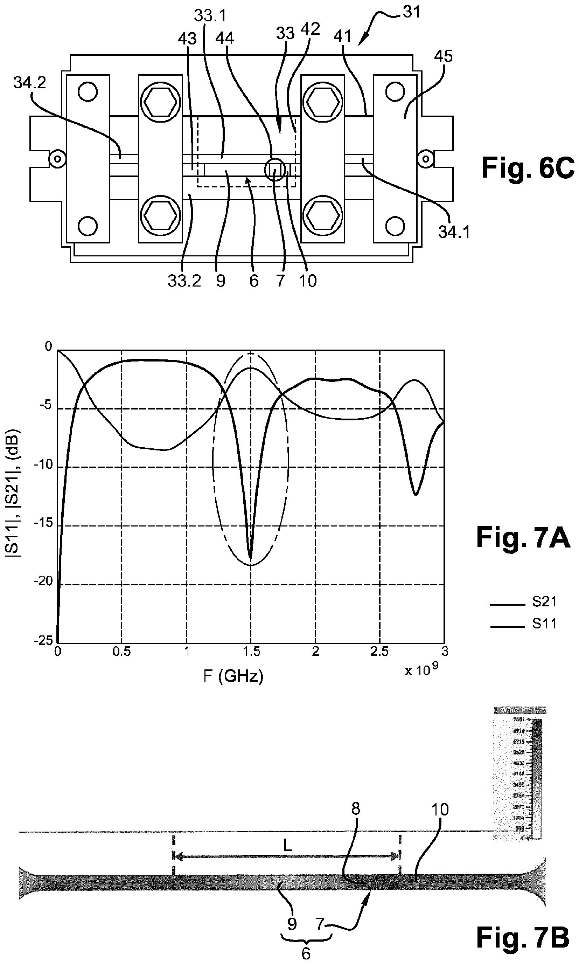

On va maintenant s'intéresser à un autre exemple de dispositif d'exposition à un champ électromagnétique objet de l'invention. Ce dispositif permet l'observation de l'objet sous test avec un microscope pendant l'exposition au champ électromagnétique. On se réfère aux figures 6A, 6B, 6C. Le dispositif d'exposition à un champ électromagnétique est scindé en deux parties 30, 31: une partie amovible 31 comportant la structure d'adaptation hétérogène 6, et une partie d'accueil 30 destinée à accueillir la partie amovible 31. La partie d'accueil 30 est destinée à être placée sur la platine d'un microscope (non représenté).

La figure 6A est une vue de dessus de la partie d'accueil 30, la figure 6B est une vue de dessous de la partie amovible 31 et la figure 6C est une vue de dessus illustrant les deux parties 30, 31 réunies en position de travail. Un avantage de prévoir une partie amovible 31 est qu'elle peut être stérilisée à l'autoclave.

La mobilité de la partie amovible 31 amène également une souplesse d'utilisation. Plusieurs parties amovibles peuvent être chargées d'objets à tester et être placées chacune à leur tour sur la partie d'accueil 30, la partie d'accueil 30 restant branchée et en place sur la platine du microscope.

Le dispositif d'exposition à un champ électromagnétique est formé d'un premier tronçon de ligne de transmission 33 destiné à être placé en position de travail entre deux autres tronçons de ligne de transmission 34.

Dans l'exemple non limitatif décrit aux figures 6, le premier tronçon de ligne de transmission 33 est un tronçon de ligne bifilaire. Les deux autres tronçons de ligne de transmission 34 sont des tronçons de lignes micro-ruban 34. Le tronçon de ligne bifilaire 33 vient se connecter électriquement à chacun des tronçons de ligne de transmission micro-ruban 34. Le tronçon de ligne bifilaire 33 se trouve sur la partie amovible 31, les deux tronçons de ligne micro-ruban 34 sont sur la partie d'accueil 30.

La partie amovible 31 comporte le tronçon de ligne bifilaire 33 pris en sandwich, dans sa partie centrale, entre une plaque support 41 et une lamelle transparente 42 en matériau électriquement isolant. La plaque support 41 sera en position sommitale lorsque la partie amovible 31 et la partie d'accueil 30 coopéreront en position de travail. La plaque support 41 est réalisée dans un matériau isolant électrique tel que, par exemple, le polycarbonate, un polymère époxyde, le polytétrafluoroéthylène. La lamelle transparente 42 peut être en verre afin d'être transparente au faisceau du microscope.

Le tronçon de ligne bifilaire 33 comporte classiquement deux conducteurs dont un, dit de transmission, (référence 33.1) et un, dit de masse, (référence 33.2). Ces deux conducteurs 33.1, 33.2 sont sensiblement parallèles, ils s'étendent selon un même axe longitudinal et sont solidaires de la plaque support 41. Une tranchée 43 est définie entre le conducteur de masse 33.2 et le conducteur de transmission 33.1.

La partie d'accueil 30 comporte un support de base 35 en matériau électriquement isolant sur lequel viendra se plaquer la partie amovible 31, côté lamelle transparente 42. Le support de base 35 peut être muni d'une cavité 36 au niveau de laquelle se terminent les deux tronçons de ligne micro-ruban devant loger la lamelle transparente 42. Le support de base 35 comporte une lumière 38 au-dessus de laquelle se trouvera l'objet lorsque les deux parties 30, 31 seront réunies en position de travail et au travers de laquelle se propagera le faisceau du microscope. Si le support de base comporte une cavité 36, la lumière se trouvera au niveau du fond 37 de la cavité 36. La cavité 36 est destinée à loger la lamelle transparente 42.

Les rubans conducteurs 34.1 et 34.2 des deux tronçons 34 de ligne micro-ruban portent les références 34.1 et 34.2 respectivement et s'étendent sur une face principale du support de base 35. Le plan de masse inférieur des tronçons 34 de ligne micro-ruban est ramené sur un plan de masse supérieur 39 sur la face principale du support de base 35 à l'aide de rivets conducteurs 40, suffisamment loin des rubans conducteurs 34.1 et 34.2 de manière à empêcher tout couplage parasite au niveau des accès aux tronçons 34 de ligne micro-ruban. Le plan de masse supérieur 39 sert à connecter la partie amovible 31, comme nous l'expliquerons plus loin. La source d'ondes électromagnétiques sera à connecter à l'un des tronçons de ligne micro-ruban 34 et la charge à l'autre tronçon de ligne micro-ruban 34.

La cavité 36 peut être omise si la lamelle transparente 42 est encastrée dans la partie amovible 31 tout en affleurant en surface. Elle peut être collée à la partie amovible 31.

Lorsque la partie d'accueil 30 et la partie amovible 31 coopèrent l'une avec l'autre en position de travail, la lamelle transparente 42 vient se plaquer contre le support de base 35 ou se loger dans la cavité 36, si elle existe. Lorsque les deux parties 30 et 31 coopèrent, le conducteur de transmission 33.1 vient en contact électrique, à chacune de ses extrémités, avec l'un des rubans conducteurs 34.1, 34.2 des tronçons 34 de ligne micro-ruban. Le conducteur de masse 33.2 vient en contact électrique avec le plan de masse supérieur 39.

Le dispositif d'exposition à un champ électromagnétique comporte, en outre, conformément à l'invention, une structure d'adaptation hétérogène 6 dont la longueur est égale à un nombre entier de demi-longueurs d'ondes de l'onde électromagnétique devant se propager dans le dispositif d'exposition à un champ électromagnétique. La structure d'adaptation hétérogène 6 est placée dans la tranchée 43 en contact mécanique avec la plaque support 41, le conducteur de masse 33.2 et le conducteur de transmission 33.1. Cette structure d'adaptation hétérogène 6 est similaire à celle représentée à la figure 1 avec l'élément d'extension 9 et le logement 7 pour l'objet à tester qui sont contigus. L'objet n'est pas visible.

Le logement 7 pour l'objet est délimité longitudinalement d'un côté par une cloison 10 en matériau diélectrique, de l'autre par l'élément d'extension 9 et latéralement par la plaque support 41, la lamelle transparente 42, le conducteur de masse 33.2 et le conducteur de transmission 33.1. Ce logement 7 est étanche et peut accueillir un échantillon liquide devant être exposé à des ondes électromagnétiques. La cloison 10 peut être par exemple en polytétrafluoroéthylène. La plaque support 41 est équipée d'un orifice 44 pour le remplissage ou le vidage du logement 7, cet orifice 44 pouvant être bouché avec un bouchon (non représenté). Des éléments presseurs 45 sont prévus pour maintenir la partie amovible 31 en pression contre la partie d'accueil 30 comme illustré sur la figure 6C.

Un dispositif d'exposition à un champ électromagnétique tel que celui illustré aux figures 6A à 6C a été simulé à l'aide du logiciel de simulation CST Microwave Studio.

Les différents matériaux du dispositif d'exposition à un champ électromagnétique ont été modélisés de la manière suivante :

Conducteurs du tronçon de ligne bifilaire et des tronçons de ligne micro-ruban : conducteurs électriques parfaits, un conducteur électrique parfait a une résistance nulle.

Cloison : polytétrafluoroéthylène (modèle électrique CST) :

*Permittivité diélectrique relative réelle* $\varepsilon' = 2{,}1$
*Tangente de l'angle de perte diélectrique* $\tan\delta = 2 \times 10^{-4}$

Elément d'extension : céramique haute permittivité (modèle défini par l'utilisateur) :

*Permittivité diélectrique relative réelle* $\varepsilon' = 78$
*Tangente de l'angle de perte diélectrique* $\tan\delta = 5 \times 10^{-4}$

Objet à tester : Echantillon liquide (modèle défini par l'utilisateur) :

*Permittivité* diélectrique relative *réelle* $\varepsilon' = 78$
*Tangente de l'angle de perte diélectrique* $\tan\delta = 0{,}089$

La structure d'adaptation hétérogène 6 a une longueur L égale à une demi- longueur d'onde (n=1) de l'onde guidée se propageant dans le dispositif d'exposition à un champ électromagnétique soit 14,9 mm. Le dispositif d'exposition à un champ électromagnétique est accordé ici à la fréquence de 1,5GHz.

La figure 7A représente les coefficients S11 (coefficient de réflexion à l'entrée lorsque la sortie est adaptée) et S21 (coefficient de transmission directe lorsque la sortie est adaptée) pour le dispositif d'exposition à un champ électromagnétique des figures 6A à 6C dans la bande 0-3GHz. A la fréquence de 1,5 GHz, les pertes d'insertion s'élèvent à -2 dB et l'adaptation en entrée est meilleure que - 15 dB.

La figure 7B montre, l'amplitude du champ électrique dans le dispositif d'exposition à un champ électromagnétique des figures 6A à 6C, vu de dessus, excité par un signal d'excitation sinusoïdal à une fréquence de 1,5 GHz. L'objet 8 est représenté sur cette figure sur la partie droite de la structure d'adaptation hétérogène 6. La cloison 10 ne fait pas partie de la structure d'adaptation hétérogène 6 dans la mesure où elle est réalisée dans un matériau ayant une permittivité diélectrique relative aussi proche que possible de celle de l'air dans ce cas.

On peut remarquer, comme attendu, que l'homogénéité du champ électrique dans l'objet est bonne, la variation du champ électrique est inférieure à 10%. L'intensité du champ électrique est maximale au niveau de l'objet. Cette évaluation est basée sur les simulations précédentes.

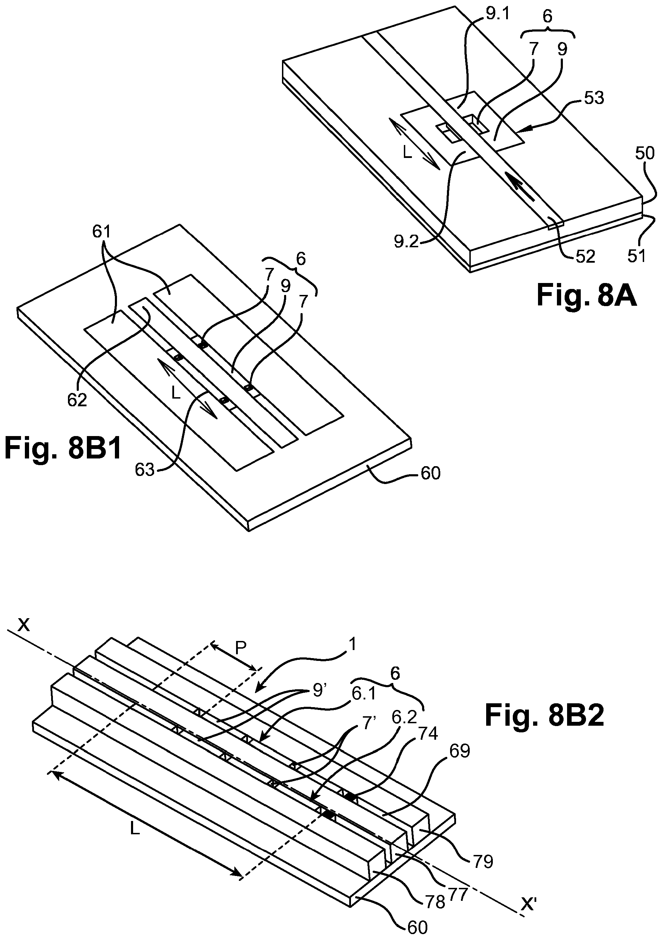

Sur la figure 8A, le dispositif d'exposition à un champ électromagnétique est formé d'un tronçon de ligne micro-ruban. Il comporte un substrat 50 en matériau diélectrique dont une face principale est métallisée pour former le plan de masse électrique 51 et dont l'autre face principale porte un ruban électriquement conducteur 52. Le substrat 50 est percé d'un trou traversant qui sert de cavité d'accueil 53 pour la structure d'adaptation hétérogène 6. Cette cavité 53 a pour fond le plan de masse électrique 51, elle est limitée latéralement par le matériau du substrat 50 et le ruban conducteur 52 la traverse à la manière d'un pont. Elle possède, comme dimension dans la direction du ruban conducteur 52, la longueur L de la structure d'adaptation hétérogène 6.

La structure d'adaptation hétérogène 6, une fois dans la cavité 53 est en contact mécanique avec le ruban conducteur 52, le plan de masse 51. La structure d'adaptation hétérogène 6 est formée, dans cet exemple non limitatif, de l'élément d'extension 9 qui prend la forme d'un bloc ayant sensiblement les dimensions et le volume de la cavité 53. Ce bloc est pourvu d'un logement 7 pour l'objet, ce logement 7 se trouvant sous le conducteur ruban 52. Dans cet exemple, le logement 7 n'est pas en bout de l'élément d'extension 9. Il est placé mais dans sa partie centrale. Cette position centrale permet également une bonne homogénéité du champ électrique à un niveau ici plus faible. Ainsi, il est placé entre deux segments 9.1, 9.2 de l'élément d'extension 9. L'un des segments est à sa droite et l'autre à sa gauche. Il serait bien sûr possible que le logement 7 soit décalé plus ou moins, le long du ruban conducteur 52 vers la droite ou la gauche par rapport à la position montrée, jusqu'à venir en contact avec le substrat 50. La longueur L de la structure d'adaptation hétérogène 6 est indiquée, elle est comptée le long du ruban conducteur 52. Dans cet exemple l'objet n'est pas représenté. On a représenté avec la flèche la direction de propagation de l'onde électromagnétique.

Sur la figure 8B1, le dispositif d'exposition à un champ électromagnétique est formé d'un tronçon de ligne de transmission coplanaire. On rappelle qu'une ligne coplanaire comporte un substrat 60 en matériau diélectrique sur lequel s'étend un ruban conducteur central 62 et deux bandes latérales 61 électriquement conductrices qui servent de masse électrique. Ici également, le substrat 60 comporte un trou non traversant ou cavité d'accueil 63 pour la structure d'adaptation hétérogène 6. Cette cavité 63 est logée sous le conducteur central 62 et s'étend jusqu'aux bandes latérales 61, de manière à ce que la structure d'adaptation hétérogène 6 qui sera logée dans la cavité 63 puisse être en contact mécanique avec le conducteur central 62 et ces deux bandes latérales 61. La cavité 63 possède comme dimension, dans la direction du conducteur central 62, sensiblement la longueur L de la structure d'adaptation hétérogène 6. La structure d'adaptation hétérogène 6 est formée dans cet exemple de l'élément d'extension 9 qui prend la forme d'un bloc ayant une dimension, le long du conducteur central 62, inférieure à celle de la cavité 63. Il y a quatre logements 7, chacun pour un objet. Ils sont placés longitudinalement, de part et d'autre de l'élément d'extension 9, et transversalement, de part et d'autre, du conducteur central 62, de manière symétrique. L'espace restant entre l'élément d'extension 9 en position sensiblement centrale dans la cavité, et les deux bords, sensiblement perpendiculaires au conducteur central 62, de la cavité 63 forment les logements 7. On aurait bien sûr pu prévoir un seul logement en amont ou en aval de l'élément d'extension, en calant l'élément d'extension contre un des bords de la cavité 63.

Sur la figure 8B2, le dispositif d'exposition à un champ électromagnétique est formé d'un tronçon de ligne de transmission coplanaire 1 avec trois conducteurs parallèles plus épais que ceux montrés sur la figure 8B1. Le substrat est référencé 60, le conducteur central porte la référence 77 et les conducteurs extrêmes les références 78 et 79. Dans cette configuration, il n'y a pas de cavité dans le substrat 60. La structure d'adaptation hétérogène 6 est subdivisée en deux demi-structures 6.1, 6.2 chacune d'entre elles étant placée dans l'espace délimité par deux conducteurs différents voisins 78, 77 ou 77, 79. Les demi-structures d'adaptation hétérogènes 6.1, 6.2 sont en contact mécanique chacune avec deux conducteurs. Chaque demi-structure d'adaptation hétérogène comporte un élément d'extension 9' coopérant avec plusieurs logements 7', pour des objets à tester.

Les logements 7', coopérant avec un même élément d'extension 9 sont espacés d'un pas p égal à une demi-longueur d'onde de l'onde électromagnétique devant se propager dans le dispositif d'exposition au champ électromagnétique. La structure d'adaptation hétérogène 6 possède une dimension L, égale à un multiple supérieur à deux de demi-longueurs d'onde de l'onde électromagnétique devant se propager dans le dispositif d'exposition au champ électromagnétique. Il en est de même pour chaque demi-structure d'adaptation hétérogène 6.1, 6.2. La dimension L est mesurée selon l'axe XX' qui est l'axe longitudinal de propagation de l'onde électromagnétique dans le dispositif d'exposition au champ électromagnétique. Le dispositif d'exposition au champ électromagnétique possède une symétrie par rapport à un axe principal du conducteur central 77. Cet axe est confondu avec l'axe XX'. Sur l'exemple illustré sur la figure 8B2 qui n'est pas limitatif, quatre logements 7' ont été représentés par demi-structure d'adaptation hétérogène 6.1 ou 6.2. Trois d'entre eux sont contenus dans l'élément d'extension 9' et le dernier, placé à une extrémité de l'élément d'extension 9', est juxtaposé à ce dernier. Il est délimité d'un côté par l'élément d'extension 9' et de l'autre par un élément de bouchage 74. Cet élément de bouchage 74 est bordé à l'opposé du logement par un matériau diélectrique 69. En l'occurrence, dans cet exemple, il s'agit d'air. Cet élément de bouchage 74 est exclu de la demi-structure d'adaptation hétérogène dans la mesure où il est réalisé dans un matériau ayant une permittivité diélectrique relative aussi proche que possible de celle du matériau diélectrique 69 qui le borde.

Sur les figures 8C1, 8C2, le dispositif d'exposition à un champ électromagnétique est formé d'un tronçon de ligne de transmission coaxiale. On rappelle qu'une ligne coaxiale comporte un conducteur central 70 sensiblement cylindrique ou âme entouré concentriquement par un conducteur externe tubulaire 71 ou tresse servant de masse électrique, les deux conducteurs 70, 71 sont séparés par un matériau diélectrique 73 tel que du polytétrafluoroéthylène ou de l'air ou même du vide. Un segment du matériau diélectrique 73 a été retiré, il a été remplacé par la structure d'adaptation hétérogène 6. Cette dernière a une forme tubulaire, elle est enfilée autour du conducteur central 70. Elle est en contact mécanique d'une part avec le conducteur central 70 et d'autre part avec le conducteur externe 71 tubulaire. Elle comporte, dans les exemples présentés sur les figures 8C1 et 8C2, un élément d'extension 9 et un logement 7 pour l'objet qui coopère avec l'élément d'extension 9. Sur la figure 8C1, l'élément d'extension 9 prend la forme d'un manchon, le logement 7 correspond à un espace délimité radialement entre le conducteur central 70 et le conducteur externe 71 et latéralement entre l'élément d'extension 9 et un élément de bouchage 74 annulaire, électriquement isolant, placé à l'opposé de l'élément d'extension 9. Cet élément de bouchage 74 ne fait pas partie de la structure d'adaptation hétérogène 6 dans la mesure où cet élément de bouchage 74 est réalisé dans un matériau ayant une permittivité diélectrique relative aussi proche que possible de celle du matériau diélectrique 73 séparant le conducteur central 71 du conducteur tubulaire externe 72 et bordant l'élément de bouchage 74 à l'opposé du logement 7.

Cet élément de bouchage 74 prend la forme d'une bague. L'élément de bouchage 74 est amovible pour permettre le remplissage et le vidage du logement 7. La longueur L de la structure d'adaptation hétérogène 6 est illustrée ainsi que la direction de propagation du champ électromagnétique. Dans cet exemple, le logement 7 pour l'objet se trouve en amont de la structure d'adaptation hétérogène 6 par rapport à la direction de propagation du champ électromagnétique. Il aurait bien sûr pu être localisé en aval. Il est possible que le logement 7 soit divisé en plusieurs compartiments 7.1 pour pouvoir exposer plusieurs objets simultanément au champ électromagnétique. Sur la figure 8C1, on suppose que le logement est compartimenté radialement en plusieurs compartiments 7.1 en forme de quartiers. Ce compartimentage ne s'applique pas seulement à ce mode de réalisation, il peut s'appliquer aux autres modes de réalisation décrits.

Si le dispositif d'exposition à un champ électromagnétique de la figure 8C1 est destiné à être utilisé verticalement, le logement 7 étant placé en haut, l'élément de bouchage 74 peut être omis. Dans un mode de fonctionnement vertical, le logement peut prendre la forme d'un ou plusieurs trous borgnes dans la partie supérieure de l'élément d'extension 9, comme on l'a représenté aux figures 8D et 8E décrites ultérieurement.

On peut également envisager que le conducteur externe 70 et le conducteur central 71 soient formés de deux segments démontables et réassemblables. La frontière entre les deux peut se trouver au niveau du logement 7 de manière à pouvoir le remplir aisément.

Sur le mode de réalisation illustré à la figure 8C2, la structure d'adaptation hétérogène 6 comporte l'élément d'extension 9 qui prend la forme d'un manchon et un seul logement 7 de forme annulaire creusé dans l'élément d'extension 9. Il n'y a pas d'élément de bouchage comme sur la figure 8C1 et le remplissage se fait radialement. Une ouverture 75 est aménagée dans le conducteur externe 71 au niveau du logement 7 et un couvercle 76 est prévu pour la refermer. Il est bien entendu ici que plusieurs logements pourraient être agencés de manière annulaire dans l'élément d'extension, et une ouverture débouchant dans chacun des logements serait aménagée dans le conducteur externe, chacune des ouvertures coopérerait avec un couvercle pour l'obturer.

En variante, le dispositif à onde guidée peut être un guide d'onde au lieu d'une ligne de transmission. Le principe sur lequel repose la présente invention reste valable pour les guides d'ondes bien que leur fonctionnement ne peut pas être décrit par la théorie des lignes.

Sur la figure 8D, le dispositif d'exposition à un champ électromagnétique est formé d'un tronçon de guide d'onde rectangulaire 80 construit autour d'un axe longitudinal XX'. L'axe XX' est orienté verticalement sur la figure 8D. On rappelle qu'un guide d'onde rectangulaire est un tube métallique de section droite rectangulaire, ce tube métallique est donc un conducteur électrique tubulaire creux et le champ électrique s'établit à l'intérieur de l'espace délimité par ce conducteur électrique tubulaire creux. La structure d'adaptation hétérogène 6 prend la forme d'un bloc parallélépipédique inséré dans le tronçon de guide d'onde 80 et en contact mécanique avec la paroi interne 81 du tube métallique. Elle épouse la forme intérieure du guide d'onde rectangulaire 80.

Le bloc forme l'élément d'extension 9 et est équipé d'un trou borgne 7 qui forme le logement pour l'objet 8. Sur la figure 8D, la propagation du champ électromagnétique est sensiblement verticale, et le trou borgne 7 est placé à une extrémité aval de la structure d'adaptation hétérogène 6. Avec cette configuration, il est possible que l'objet 8 soit liquide et un bouchon de fermeture du logement n'est pas forcément nécessaire. On suppose que les parois externes latérales de l'élément d'extension 9 sont métallisées pour améliorer le contact avec la paroi interne du tronçon de guide d'onde rectangulaire 80.

Sur la figure 8E, le dispositif d'exposition à un champ électromagnétique est formé d'un tronçon de guide d'onde circulaire 90 construit autour d'un axe longitudinal XX'. L'axe XX' est orienté verticalement sur la figure 8E. On rappelle qu'un guide d'onde circulaire est un tube métallique de section droite circulaire, ce tube métallique est donc un conducteur électrique creux et le champ électrique s'établit à l'intérieur de l'espace délimité par ce conducteur électrique tubulaire creux. La structure d'adaptation hétérogène 6 prend la forme d'un bloc cylindrique d'axe XX', insérée dans le tronçon guide d'onde circulaire 90 et en contact mécanique avec la paroi interne du tube métallique. Elle épouse la forme intérieure du guide d'onde circulaire 90. Elle est coaxiale avec lui. Le bloc forme l'élément d'extension 9 et est équipé d'un trou borgne 7 qui forme le logement pour l'objet. Sur la figure 8E, la propagation du champ électromagnétique est sensiblement verticale, et le trou borgne 7 est placé à une extrémité aval de la structure d'adaptation hétérogène 6. Avec cette configuration, il est possible que l'objet soit liquide et un bouchon de fermeture du logement n'est pas forcément nécessaire. Un ou plusieurs logements en forme de trou borgne conviendraient également avec le dispositif d'exposition à un champ électromagnétique formé d'un tronçon de ligne de transmission coaxiale comme celui des figures 8C1, 8C2.

Sur ces deux figures, il est préférable que les guides d'ondes soient formés de deux segments démontables et réassemblables. La frontière entre les deux peut se trouver au niveau de l'embouchure du trou borgne 7. D'autres positions peuvent bien sûr être envisageables. On peut ainsi aisément remplir et vider le trou borgne 7. Sur la figure 8D, les deux segments portent les références 80.1 et 80.2 et sur la figure 8E, les deux segments portent les références 90.1 et 90.2. Les segments peuvent être raboutés par vissage sur des élargissements extérieurs. De nombreuses autres solutions sont cependant possibles.

On peut également envisager que les logements débouchent latéralement ou radialement dans la paroi externe des guides d'ondes qu'ils soient respectivement rectangulaires ou circulaires.

Dans tous les exemples des figures 8, il est bien entendu que la structure d'adaptation hétérogène possède la caractéristique de longueur énoncée précédemment et l'élément d'extension la caractéristique de permittivité diélectrique relative énoncée précédemment.

On précise que l'on cherche à remplir au mieux le logement avec l'objet pour éviter la présence d'air dans le logement.

Le positionnement de l'objet dans la structure d'adaptation hétérogène se fait en fonction de la variation axiale de l'amplitude du champ électrique qui s'établit dans la structure d'adaptation hétérogène. Il existe des positions optimales en termes d'homogénéité et de niveau de champ électrique pour l'objet ou les objets, elles sont situées, le long de la structure d'adaptation hétérogène, à des multiples de la demi-longueur d'onde de l'onde électromagnétique devant se propager dans le dispositif d'exposition au champ électromagnétique.

Bien que plusieurs modes de réalisation de la présente invention aient été représentés et décrits de façon détaillée, on comprendra que différents changements et modifications puissent être apportés sans sortir du cadre de l'invention.

## REFERENCES CITEES

[1] Demande de brevet français déposée le 28 mai 2014 sous le numéro d'enregistrement 14 54 821, publiée ultérieurement sous le numéro FR3021743;

[2] A. Paffi et al., Exposure systems for bioelectromagnetic investigations in the radiofrequency range : classification and emerging trends, Proceedings of EuCAP 2011, pages 3159-3163;

[3] A. Paffi et al., Review of radiofrequency exposure systems for in vitro biological experiments, Proceedings of EuCAP 2010, Barcelona, 12-16 avril 2010;

[4] A. Paffi et al., Considerations for developing an RF exposure system: a review for in vitro biological experiments, IEEE Transactions on microwave theory and techniques, vol.58, N° 10, October 2010, pages 2702-2714;

[5] N. Kuster et al., Recommended minimal requirements and development guidelines for exposure setups of bio-experiments addressing the health risk concern of wireless communications, Biolectromagnetics, N° 21, pages 508-514, 2000 ;

[6] M. Liberti et al, A coplanar-waveguide system for cells exposure during electrophysiological recordings, IEEE Transactions on microwave theory and techniques, vol.52, N° 11, October 2004, pages 2251-2258;

**[7]** J. X. Zhao et al, Dosimetry and température evaluations of a 1800 MHz TEM cell for in vitro exposure with standing waves, Progress in electromagnetics research, vol. 124, pages 487-510, 2012;

**[8]** C. Iftode et al, Design and validation of a TEM cell used for radiofrequency dosimetric studies, Progress in electromagnetics research, vol. 132, pages 369-388, 2012;

[9] S. Kohler et al, Characterization of a TEM cell-based setup for the exposure of biological cell suspensions to high-intensity nanosecond pulsed electric fields (nsPEFs), IEEE 2012;

[10] Y-H Wu et al, Moveable wire electrode microchamber for nanosecond pulsed electric-field delivery, IEEE Transactions on biomedical engineering, vol.60, N° 2, February 2013, pages 489-496;

**[11]** P. Krishnaswamy et al, Compact high voltage subnanosecond pulsed power delivery system for biological applications, 16th IEEE International conférence on pulsed power, 2007, pages 476-480;

**[12]** Demande de brevet français publiée sous le numéro 2 998 813.

## Revendications

**1.** Ensemble comprenant :

- au moins un objet (8) à tester, ledit objet à tester possédant une permittivité diélectrique donnée ; et
- un dispositif d'exposition à un champ électromagnétique dudit au moins un objet à tester, ledit dispositif étant formé :
- d'un tronçon de dispositif à onde électromagnétique guidée (1) de type guide d'onde ou ligne de transmission, dans lequel l'onde électromagnétique va se propager, s'étendant selon un axe longitudinal (XX') qui est l'axe de propagation de l'onde électromagnétique, et possédant un conducteur électrique tubulaire creux (81) à l'intérieur duquel s'établit le champ électrique ou plusieurs conducteurs électriques (2.1, 2.2) entre lesquels s'établit le champ électrique, et en outre,
- d'une structure d'adaptation hétérogène (6) en contact mécanique avec le ou les conducteurs électriques, la structure d'adaptation hétérogène (6) comportant au moins un élément d'extension (9) et au moins un logement (7) configuré pour accueillir le ou chaque objet (8) à tester afin d'exposer celui-ci ou ceux-ci au champ électromagnétique lors de tests, ce logement (7) étant contenu dans ou juxtaposé à l'élément d'extension (9),

**caractérisé en ce que** l'élément d'extension (9) est réalisé dans un matériau ayant une permittivité diélectrique relative ($\varepsilon$) égale à la permittivité diélectrique relative du ou de chaque objet (8) à tester à plus ou moins 50%, et **en ce que** la structure d'adaptation hétérogène (6) possède une dimension (L), selon l'axe longitudinal, égale à un multiple non nul de demi-longueurs d'onde de l'onde électromagnétique devant se propager dans le dispositif d'exposition au champ électromagnétique.

**2.** Ensemble selon la revendication 1, dans lequel l'objet à tester possède une conductivité équivalente donnée, et le matériau de l'élément d'extension (9) est choisi pour avoir une conductivité électrique équivalente ($\sigma_E$) égale à ladite conductivité électrique équivalente de l'objet (8) à tester, à plus ou moins 30%.

**3.** Ensemble selon l'une des revendications 1 ou 2, dans lequel le dispositif d'exposition à un champ électromagnétique est formé d'un tronçon de ligne bifilaire (2) ayant deux conducteurs parallèles (2.1, 2.2), dans lequel la structure d'adaptation hétérogène (6) s'étend longitudinalement entre les deux conducteurs (2.1, 2.2), le logement (7) étant juxtaposé à l'élément d'extension (9).

**4.** Ensemble selon l'une des revendications 1 ou 2, dans lequel le dispositif d'exposition à un champ électromagnétique est formé d'un tronçon de ligne triplaque avec un conducteur central (20) placé entre deux conducteurs (21, 22) en vis-à-vis, un espace étant aménagé entre chacun des conducteurs (21, 22) en vis-à-vis et le conducteur central (20), la structure d'adaptation hétérogène (6) étant subdivisée en deux demi-structures, chacune des demi-structures étant placée dans un des espaces.

**5.** Ensemble selon l'une des revendications 1 ou 2, dans lequel le dispositif d'exposition à un champ électromagnétique est formé d'un tronçon de ligne de transmission comportant un substrat (50) en matériau diélectrique, la structure d'adaptation hétérogène (6) étant logée dans une cavité (63) du substrat ou dans un trou traversant (53) du substrat.

**6.** Ensemble selon l'une des revendications 1 ou 2, dans lequel le dispositif d'exposition à un champ électromagnétique est formé d'un tronçon de ligne coaxiale avec un conducteur central (70) et un conducteur externe (71) entourant le conducteur central et du matériau diélectrique (73) entre le conducteur central et le conducteur externe, dans lequel la structure d'adaptation hétérogène (6) est à la place d'un tronçon de matériau diélectrique séparant le conducteur central (70) et le conducteur externe (71) de la ligne coaxiale.

7. Ensemble selon l'une des revendications 1 ou 2, dans lequel le dispositif d'exposition à un champ électromagnétique est formé d'un tronçon de ligne coplanaire ayant trois conducteurs parallèles (77, 78, 79), la structure d'adaptation hétérogène (6) étant subdivisée en deux demi-structures d'adaptation hétérogènes (6.1, 6.1) s'étendant chacune longitudinalement entre deux conducteurs différents et comportant chacune un élément d'extension (9') en matériau diélectrique et un ou plusieurs logements (7') coopérant avec l'élément d'extension (9').

8. Ensemble selon l'une des revendications 1 à 7, dans lequel lorsque le dispositif d'exposition à un champ électromagnétique comprend plusieurs logements (7), situés le long de la structure d'adaptation hétérogène (6) à des positions multiples de la demi-longueur d'onde de l'onde électromagnétique devant se propager dans le dispositif d'exposition au champ électromagnétique.

9. Ensemble selon l'une des revendications 1 à 8, dans lequel le dispositif d'exposition à un champ magnétique comporte un logement (7) qui est accolé d'un côté à l'élément d'extension (9) et de l'autre est bordé par un élément de bouchage (10) en matériau diélectrique, cet élément de bouchage étant bordé à l'opposé du logement par un matériau diélectrique, cet élément de bouchage (10) étant exclu de la structure d'adaptation hétérogène (6) dans la mesure où il est réalisé dans un matériau ayant une permittivité diélectrique relative égale à la permittivité diélectrique relative du matériau diélectrique qui le borde à plus ou moins 50%.

10. Ensemble selon l'une des revendications 1 à 9, dans lequel le dispositif d'exposition à un champ magnétique comporte un logement (7) qui est placé entre deux segments (9.1, 9.2) de l'élément d'extension (9).

11. Ensemble selon l'une des revendications 1 à 9, dans lequel le dispositif d'exposition à un champ magnétique comporte un logement (7) qui est incorporé dans l'élément d'extension (9).

12. Ensemble selon l'une des revendications 1 à 11, dans lequel le dispositif d'exposition à un champ magnétique comporte un logement (7) qui est subdivisé en plusieurs compartiments (7.1), chacun devant accueillir un objet (8) à tester.

13. Ensemble selon l'une des revendications 1 à 2, dans lequel le dispositif d'exposition à un champ magnétique est formé d'un tronçon de guide d'onde dans lequel la structure d'adaptation hétérogène (6) épouse la forme intérieure du guide d'onde.

14. Ensemble selon la revendication 13, dans lequel le dispositif d'exposition à un champ magnétique est formé d'un tronçon de guide d'onde (80, 90) scindé en deux segments raccordables (80.1, 80.2 ; 90.1, 90.2) ou d'un tronçon de ligne de transmission coaxiale ayant un conducteur externe tubulaire (71) et un conducteur central (70) scindés en deux segments raccordables.

15. Ensemble selon l'une des revendications 1 à 2, dans lequel le dispositif d'exposition à un champ magnétique comporte une partie amovible (31) comprenant un premier tronçon de ligne de transmission (33) doté de la structure d'adaptation hétérogène et une partie d'accueil (30), comportant un deuxième et un troisième tronçon de ligne de transmission (34), destinée à être placée sur la platine d'un microscope, en position de travail, le premier tronçon de ligne de transmission (33) étant connecté d'un côté au deuxième tronçon de ligne de transmission (34) et de l'autre à l'autre au troisième tronçon de ligne de transmission (34).

16. Procédé de test d'au moins un objet à tester présentant une permittivité diélectrique relative, le procédé comprenant les étapes consistant à :

    - fournir un tronçon de dispositif à onde électromagnétique guidée (1) de type guide d'onde ou ligne de transmission dans lequel l'onde électromagnétique va se propager, s'étendant selon un axe longitudinal (XX') qui est l'axe de propagation de l'onde électromagnétique, et possédant un conducteur électrique tubulaire creux (81) à l'intérieur duquel s'établit le champ électrique ou plusieurs conducteurs électriques (2.1, 2.2) entre lesquels s'établit le champ électrique et d'une structure d'adaptation hétérogène (6) en contact mécanique avec le ou les conducteurs électriques, la structure d'adaptation hétérogène (6) comportant au moins un élément d'extension (9) et au moins un logement (7) contenu dans ou juxtaposé à l'élément d'extension (9), l'élément d'extension (9) étant réalisé dans un matériau ayant une permittivité diélectrique relative ($\varepsilon$) égale à la permittivité diélectrique relative du ou de chaque objet (8) à plus ou moins 50%, et la structure d'adaptation hétérogène (6) possédant une dimension (L), selon l'axe longitudinal, égale à un multiple non nul de demi-longueurs d'onde de l'onde électromagnétique devant se propager dans le tronçon de dispositif à onde électromagnétique guidée ;
    - mettre en place l'objet (8) à tester dans le logement (7),
    - faire se propager une onde électromagnétique incidente dans le tronçon de dispositif à onde électromagnétique guidée (1).

**Patentansprüche**

1. Anordnung umfassend:

   - mindestens ein zu testendes Objekt (8), wobei das zu testende Objekt eine gegebene dielektrische Dielektrizitätskonstante besitzt; und
   - eine Vorrichtung zum Beaufschlagen des mindestens eines zu testenden Objekts mit einem elektromagnetischen Feld, wobei die Vorrichtung aus Folgendem besteht:
   - einem Abschnitt einer Vorrichtung für geführte elektromagnetische Wellen (1) des Typs Wellenleiter oder Übertragungsleitung, in dem sich die elektromagnetische Welle ausbreiten wird, der sich entlang einer Längsachse (XX') erstreckt, die die Ausbreitungsachse der elektromagnetischen Welle ist, und der einen hohlen rohrförmigen elektrischen Leiter (81) besitzt, in dessen Innerem sich das elektrische Feld aufbaut, oder mehrere elektrische Leiter (2.1, 2.2), zwischen denen sich das elektrische Feld aufbaut, und ferner,
   - einer heterogenen Anpassungsstruktur (6) in mechanischem Kontakt mit dem oder den elektrischen Leitern, wobei die heterogene Anpassungsstruktur (6) mindestens ein Erweiterungselement (9) und mindestens ein Aufnahmefach (7) umfasst, das so konfiguriert ist, dass es das oder jedes zu testende Objekt (8) aufnimmt, um diesen oder diese bei Tests dem elektromagnetischen Feld auszusetzen, wobei das Aufnahmefach (7) in dem Erweiterungselement (9) enthalten oder neben diesem angeordnet ist, **dadurch gekennzeichnet, dass** das Erweiterungselement (9) aus einem Material mit einer relativen dielektrischen Dielektrizitätskonstante ($\varepsilon$) hergestellt ist, die der relativen dielektrischen Dielektrizitätskonstante des oder jedes zu testenden Objekts (8) plus oder minus 50 % entspricht, und, dass die heterogene Anpassungsstruktur (6) eine Abmessung (L) entlang der Längsachse aufweist, die gleich einem von Null verschiedenen Vielfachen der halben Wellenlängen der elektromagnetischen Welle ist, die sich in der Vorrichtung zum Beaufschlagen mit einem elektromagnetischen Feld ausbreiten soll.

2. Anordnung nach Anspruch 1, wobei das zu testende Objekt eine gegebene äquivalente Leitfähigkeit hat und das Material des Erweiterungselements (9) so gewählt ist, dass es eine äquivalente elektrische Leitfähigkeit ($\sigma_E$) hat, die gleich der äquivalenten elektrischen Leitfähigkeit des zu testenden Objekts (8) plus oder minus 30 % ist.

3. Anordnung nach einem der Ansprüche 1 oder 2, wobei die Vorrichtung zum Beaufschlagen mit einem elektromagnetischen Feld aus einem zweiadrigen Leitungsabschnitt (2) mit zwei parallelen Leitern (2.1, 2.2) gebildet ist, wobei sich die heterogene Anpassungsstruktur (6) in Längsrichtung zwischen den beiden Leitern (2.1, 2.2) erstreckt, wobei das Aufnahmefach (7) neben dem Erweiterungselement (9) angeordnet ist.

4. Anordnung nach einem der Ansprüche 1 oder 2, wobei die Vorrichtung zum Beaufschlagen mit einem elektromagnetischen Feld aus einem dreiseitigen Leitungsabschnitt mit einem Mittelleiter (20) gebildet ist, der zwischen zwei gegenüberliegenden Leitern (21, 22) angeordnet ist, wobei zwischen jedem der gegenüberliegenden Leiter (21, 22) und dem Mittelleiter (20) ein Zwischenraum vorhanden ist, wobei die heterogene Anpassungsstruktur (6) in zwei Halbstrukturen unterteilt ist, wobei jede der Halbstrukturen in einem der Zwischenräume angeordnet ist.

5. Anordnung nach einem der Ansprüche 1 oder 2, wobei die Vorrichtung zum Beaufschlagen mit einem elektromagnetischen Feld aus einem Übertragungsleitungsabschnitt gebildet ist, der ein Substrat (50) aus dielektrischem Material umfasst, wobei die heterogene Anpassungsstruktur (6) in einem Hohlraum (63) des Substrats oder in einem Durchführungsloch (53) des Substrats untergebracht ist.

6. Anordnung nach einem der Ansprüche 1 oder 2, wobei die Vorrichtung zum Beaufschlagen mit einem elektromagnetischen Feld aus einem Abschnitt einer Koaxialleitung mit einem Mittelleiter (70) und einem den Mittelleiter umgebenden Außenleiter (71) und dielektrischem Material (73) zwischen dem Mittelleiter und dem Außenleiter gebildet ist, wobei die heterogene Anpassungsstruktur (6) anstelle eines Abschnitts aus dielektrischem Material, der den Mittelleiter (70) und den Außenleiter (71) der Koaxialleitung trennt, vorhanden ist.

7. Anordnung nach einem der Ansprüche 1 oder 2, wobei die Vorrichtung zum Beaufschlagen mit einem elektromagnetischen Feld aus einem koplanaren Leitungsabschnitt mit drei parallelen Leitern (77, 78, 79) gebildet ist, wobei die heterogene Anpassungsstruktur (6) in zwei heterogene Anpassungshalbstrukturen (6.1, 6.1) unterteilt ist, die sich jeweils in Längsrichtung zwischen zwei verschiedenen Leitern erstrecken und jeweils ein Erweiterungselement (9') aus dielektrischem Material sowie ein oder mehrere Aufnahmefächer (7') aufweisen, die mit dem Erweiterungselement (9') zusammenwirken.

**8.** Anordnung nach einem der Ansprüche 1 bis 7, wobei, wenn die Vorrichtung zum Beaufschlagen mit einem elektromagnetischen Feld mehrere Aufnahmefächer (7) umfasst, die entlang der heterogenen Anpassungsstruktur (6) an mehreren Positionen der halben Wellenlänge der elektromagnetischen Welle, die sich in der Vorrichtung zum Beaufschlagen mit einem elektromagnetischen Feld ausbreiten soll, angeordnet sind.

**9.** Anordnung nach einem der Ansprüche 1 bis 8, wobei die Vorrichtung zum Beaufschlagen mit einem magnetischen Feld ein Aufnahmefach (7) aufweist, das auf einer Seite an das Erweiterungselement (9) angrenzt und auf der anderen Seite von einem Verschlusselement (10) aus dielektrischem Material begrenzt wird, wobei dieses Verschlusselement auf der dem Aufnahmefach gegenüberliegenden Seite von einem dielektrischen Material begrenzt wird, wobei dieses Verschlusselement (10) von der heterogenen Anpassungsstruktur (6) in dem Maße ausgeschlossen ist, in dem es aus einem Material mit einer relativen dielektrischen Permittivität hergestellt ist, die gleich der relativen dielektrischen Permittivität des dielektrischen Materials ist, das es zu plus oder minus 50 % begrenzt.

**10.** Anordnung nach einem der Ansprüche 1 bis 9, wobei die Vorrichtung zum Beaufschlagen mit einem magnetischen Feld ein Aufnahmefach (7) aufweist, das zwischen zwei Segmenten (9.1, 9.2) des Erweiterungselements (9) angeordnet ist.

**11.** Anordnung nach einem der Ansprüche 1 bis 9, wobei die Vorrichtung zum Beaufschlagen mit einem magnetischen Feld ein Aufnahmefach (7) aufweist, das in das Erweiterungselement (9) eingegliedert ist.

**12.** Anordnung nach einem der Ansprüche 1 bis 11, wobei die Vorrichtung zum Beaufschlagen mit einem magnetischen Feld ein Aufnahmefach (7) aufweist, das in mehrere Fächer (7.1) unterteilt ist, von denen jedes ein zu testendes Objekt (8) aufnehmen soll.

**13.** Anordnung nach einem der Ansprüche 1 bis 2, wobei die Vorrichtung zum Beaufschlagen mit einem magnetischen Feld aus einem Abschnitt eines Wellenleiters gebildet ist, in dem die heterogene Anpassungsstruktur (6) sich an die innere Form des Wellenleiters anpasst.

**14.** Anordnung nach Anspruch 13, wobei die Vorrichtung zum Beaufschlagen mit einem magnetischen Feld aus einem Abschnitt eines Wellenleiters (80, 90), der in zwei verbindbare Segmente (80.1, 80.2; 90.1, 90.2) geteilt ist, oder aus einem Abschnitt einer koaxialen Übertragungsleitung mit einem rohrförmigen Außenleiter (71) und einem Mittelleiter (70), die in zwei verbindbare Segmente geteilt sind, gebildet ist.

**15.** Anordnung nach einem der Ansprüche 1 bis 2, wobei die Vorrichtung zum Beaufschlagen eines magnetischen Feldes einen abnehmbaren Teil (31) mit einem ersten Übertragungsleitungsabschnitt (33), der mit der heterogenen Anpassungsstruktur versehen ist, und einen Aufnahmeteil (30) mit einem zweiten und einem dritten Übertragungsleitungsabschnitt (34) aufweist, dazu bestimmt ist, auf dem Objekttisch eines Mikroskops in einer Arbeitsposition angeordnet zu werden, wobei der erste Übertragungsleitungsabschnitt (33) auf der einen Seite mit dem zweiten Übertragungsleitungsabschnitt (34) und auf der anderen Seite mit dem dritten Übertragungsleitungsabschnitt (34) verbunden ist.

**16.** Verfahren zum Testen mindestens eines zu testenden Objekts mit einer relativen dielektrischen Permittivität, wobei das Verfahren die folgenden Schritte umfasst:

- einen Abschnitt einer Vorrichtung für geführte elektromagnetische Wellen (1) vom Typ Wellenleiter oder Übertragungsleitung bereitstellen, in dem sich die elektromagnetische Welle ausbreiten wird und der sich entlang einer Längsachse (XX') erstreckt, die die Ausbreitungsachse der elektromagnetischen Welle ist, und einen hohlen rohrförmigen elektrischen Leiter (81) besitzt, in dessen Innerem sich das elektrische Feld aufbaut, oder mehrere elektrische Leiter (2.1, 2.2), zwischen denen sich das elektrische Feld aufbaut, und eine heterogene Anpassungsstruktur (6) in mechanischem Kontakt mit dem oder den elektrischen Leitern, wobei die heterogene Anpassungsstruktur (6) mindestens ein Erweiterungselement (9) und mindestens ein Aufnahmefach (7) umfasst, das in dem Erweiterungselement (9) enthalten ist oder neben diesem liegt, wobei das Erweiterungselement (9) aus einem Material mit einer relativen dielektrischen Dielektrizitätskonstante ($\varepsilon$) gleich der heterogenen Anpassungsstruktur (6) hergestellt ist, die eine Abmessung (L) entlang der Längsachse gleich einem von Null verschiedenen Vielfachen der halben Wellenlängen der elektromagnetischen Welle, die sich in dem Abschnitt der Vorrichtung mit geführter elektromagnetischer Welle ausbreiten soll, besitzt;
- das zu testende Objekt (8) in das Aufnahmefach (7) einsetzen,
- eine einfallende elektromagnetische Welle sich in dem Abschnitt der Vorrichtung für geführte elektromagnetische Wellen (1) ausbreiten zu lassen.

## Claims

1. An assembly comprising:

   - at least one object (8) to be tested, said object to be tested having a given dielectric permittivity; and
   - a device for exposing said at least one object to be tested to an electromagnetic field, said device being formed by:
   - a section of guided electromagnetic wave device (1) of the waveguide or transmission line type, in which the electromagnetic wave will propagate, extending along a longitudinal axis (XX') which is the axis of propagation of the electromagnetic wave, and having a hollow tubular electrical conductor (81) inside which the electric field is established, or several electrical conductors (2.1, 2.2) between which the electric field is established, and further,
   - a heterogeneous matching structure (6) in mechanical contact with the electrical conductor or conductors, the heterogeneous matching structure (6) including at least one extension element (9) and at least one housing (7) configured to accommodate the or each object (8) to be tested in order to expose the same to the electromagnetic field during testing, this housing (7) being contained in or juxtaposed to the extension element (9),
   **characterised in that** the extension element (9) is made of a material having a relative dielectric permittivity ($\varepsilon$) equal to the relative dielectric permittivity of the or each object (8) to be tested to within 50%,
   and **in that** the heterogeneous matching structure (6) has a dimension (L), along the longitudinal axis, equal to a non-zero multiple of half wavelengths of the electromagnetic wave to be propagated in the electromagnetic field exposing device.

2. The assembly according to claim 1, wherein the object to be tested has a given equivalent conductivity, and the material of the extension element (9) is selected to have an equivalent electrical conductivity ($\sigma_E$) equal to said equivalent electrical conductivity of the object (8) to be tested, to within 30%.

3. The assembly according to one of claims 1 or 2, wherein the electromagnetic field exposing device is formed by a two-wire line section (2) having two parallel conductors (2.1, 2.2), wherein the heterogeneous matching structure (6) extends longitudinally between the two conductors (2.1, 2.2), the housing (7) being juxtaposed to the extension element (9).

4. The assembly according to one of claims 1 or 2, wherein the electromagnetic field exposing device is formed by a triplate line section with a central conductor (20) placed between two opposite conductors (21, 22), a space being arranged between each of the opposite conductors (21, 22) and the central conductor (20), the heterogeneous matching structure (6) being subdivided into two half-structures, each of the half-structures being placed in one of the spaces.

5. The assembly according to one of claims 1 or 2, wherein the electromagnetic field exposing device is formed by a transmission line section including a substrate (50) of dielectric material, the heterogeneous matching structure (6) being housed in a cavity (63) of the substrate or in a through hole (53) of the substrate.

6. The assembly according to one of claims 1 or 2, wherein the electromagnetic field exposing device is formed by a section of coaxial line with a central conductor (70) and an external conductor (71) surrounding the central conductor and by the dielectric material (73) between the central conductor and the external conductor, wherein the heterogeneous matching structure (6) is in place of a section of dielectric material separating the central conductor (70) and the external conductor (71) from the coaxial line.

7. The assembly according to one of claims 1 or 2, wherein the electromagnetic field exposing device is formed by a coplanar line section having three parallel conductors (77, 78, 79), the heterogeneous matching structure (6) being subdivided into two heterogeneous matching half-structures (6.1, 6.1) each longitudinally extending between two different conductors and each including an extension element (9') of dielectric material and one or more housings (7') cooperating with the extension element (9').

8. The assembly according to one of claims 1 to 7, wherein when the electromagnetic field exposing device comprises a plurality of housings (7), located along the heterogeneous matching structure (6) at multiple positions of the half wavelength of the electromagnetic wave to be propagated in the electromagnetic field exposing device.

9. The assembly according to one of claims 1 to 8, wherein the magnetic field exposing device includes a housing (7) which is adjoined on one side to the extension element (9) and on the other side is bordered by a sealing element (10) made of dielectric material, this sealing element being bordered opposite to the housing by a dielectric material, this sealing element (10) being excluded from the heterogeneous matching structure (6) insofar as it is made of a material having a relative dielectric permittivity equal to the relative dielectric permittivity of the dielectric material bordering it to within 50%.

10. The assembly according to one of claims 1 to 9, wherein the magnetic field exposing device includes a housing (7) which is placed between two segments (9.1, 9.2) of the extension element (9).

11. The assembly according to one of claims 1 to 9, wherein the magnetic field exposing device includes a housing (7) which is incorporated into the extension element (9).

12. The assembly according to one of claims 1 to 11, wherein the magnetic field exposing device includes a housing (7) which is subdivided into a plurality of compartments (7.1), each for accommodating an object (8) to be tested.

13. The assembly according to one of claims 1 to 2, wherein the magnetic field exposing device is formed by a waveguide section in which the heterogeneous matching structure (6) conforms to the internal shape of the waveguide.

14. The assembly according to claim 13, wherein the magnetic field exposing device is formed by a section of waveguide (80, 90) split into two connectable segments (80.1, 80.2; 90.1, 90.2) or by a coaxial transmission line section having a tubular outer conductor (71) and a central conductor (70) split into two connectable segments.

15. The assembly according to one of claims 1 to 2, wherein the magnetic field exposing device includes a removable part (31) comprising a first transmission line section (33) provided with the heterogeneous matching structure and an accommodating part (30), including a second and a third transmission line section (34), to be placed on the stage of a microscope, in a work position, the first transmission line section (33) being connected on one side to the second transmission line section (34) and on the other side to the third transmission line section (34).

16. A method for testing at least one object to be tested having a relative dielectric permittivity, the method comprising the steps of:

- providing a section of guided electromagnetic wave device (1) of the waveguide or transmission line type in which the electromagnetic wave will propagate, extending along a longitudinal axis (XX') which is the axis of propagation of the electromagnetic wave, and having a hollow tubular electrical conductor (81) inside which the electric field is established, or a plurality of electrical conductors (2.1, 2.2) between which the electric field is established and a heterogeneous matching structure (6) in mechanical contact with the electric conductor or conductors, the heterogeneous matching structure (6) including at least one extension element (9) and at least one housing (7) contained in or juxtaposed to the extension element (9), the extension element (9) being made of a material having a relative dielectric permittivity ($\varepsilon$) equal to the relative dielectric permittivity of the or each object (8) to within 50%, and the heterogeneous matching structure (6) having a dimension (L), along the longitudinal axis, equal to a non-zero multiple of half-wavelengths of the electromagnetic wave to be propagated in the section of guided electromagnetic wave device;
- placing the object (8) to be tested in the housing (7),
- propagating an incident electromagnetic wave in the section of guided electromagnetic wave device (1).

**Fig. 1**

**Fig. 2A**

Plan A Plan B

-201- -203- -202-

**Fig. 2B**

$Z_A$ $Z_B$

Plan A Plan B

Fig. 3A

Fig. 3B

**Fig. 4A**

**Fig. 4B**

**Fig. 4C**

Fig. 5A

S21
S11

Fig. 5B

Fig. 6A

Fig. 6B

Fig. 6C

Fig. 7A

—— S21
——— S11

Fig. 7B

**Fig. 8A**

**Fig. 8B1**

**Fig. 8B2**

**Fig. 8C1**

**Fig. 8C2**

**Fig. 8D**

**Fig. 8E**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3021743
- US 2004155726 A1
- US 3501692 A
- WO 1454821 A
- FR 2998813

**Littérature non-brevet citée dans la description**

- **A. PAFFI et al.** Exposure systems for bioelectromagnetic investigations in the radiofrequency range : classification and emerging trends. *Proceedings of EuCAP,* 2011, 3159-3163
- **A. PAFFI et al.** Review of radiofrequency exposure systems for in vitro biological experiments. *Proceedings of EuCAP 2010, Barcelona,* 12 Avril 2010
- **A. PAFFI et al.** Considerations for developing an RF exposure system: a review for in vitro biological experiments. *IEEE Transactions on microwave theory and techniques,* Octobre 2010, vol. 58 (10), 2702-2714
- **N. KUSTER et al.** Recommended minimal requirements and development guidelines for exposure setups of bio-experiments addressing the health risk concern of wireless communications. *Biolectromagnetics,* 2000, (21), 508-514
- **M. LIBERTI et al.** A coplanar-waveguide system for cells exposure during electrophysiological recordings. *IEEE Transactions on microwave theory and techniques,* Octobre 2004, vol. 52 (11), 2251-2258
- **J. X. ZHAO et al.** Dosimetry and température evaluations of a 1800 MHz TEM cell for in vitro exposure with standing waves. *Progress in electromagnetics research,* 2012, vol. 124, 487-510
- **C. IFTODE et al.** Design and validation of a TEM cell used for radiofrequency dosimetric studies. *Progress in electromagnetics research,* 2012, vol. 132, 369-388
- **S. KOHLER et al.** Characterization of a TEM cell-based setup for the exposure of biological cell suspensions to high-intensity nanosecond pulsed electric fields (nsPEFs). IEEE, 2012
- **Y-H WU et al.** Moveable wire electrode microchamber for nanosecond pulsed electric-field delivery. *IEEE Transactions on biomedical engineering,* Février 2013, vol. 60 (2), 489-496
- **P. KRISHNASWAMY et al.** Compact high voltage subnanosecond pulsed power delivery system for biological applications. *16th IEEE International conférence on pulsed power,* 2007, 476-480